# EUROPEAN PATENT APPLICATION

(11) **EP 2 704 090 A1**
(43) Date of publication of application: **05.03.2014**
(21) Application number: 11864166.1
(22) Date of filing: 27.04.2011
(51) Int. Cl.: G06Q 50/00

(54) **GOODS TRANSPORTATION SIMULATION DEVICE, GOODS TRANSPORTATION PLAN CREATION DEVICE, GOODS STORAGE DESIGN SUPPORT DEVICE, GOODS TRANSPORTATION SIMULATION METHOD, GOODS TRANSPORTATION PLAN CREATION METHOD, GOODS STORAGE DESIGN SUPPORT METHOD AND PROGRAM**

(71) Applicant: Hitachi, Ltd., Tokyo 100-8280 (JP)
(72) Inventor: NAGAHARA Satoshi, Chiyoda-ku, Tokyo 100-8280 (JP); ISHIBASHI Hisaya, Chiyoda-ku, Tokyo 100-8280 (JP)
(74) Representative: Strehl Schübel-Hopf & Partner
(86) International application number: PCT/JP2011/060213
(87) International publication number: WO 2012/147172

(57) **Abstract**

A deadlock detection resolution processing part (123) detects whether or not a deadlock occurs concerning transportation of an article, based on information, computed by an article flow simulation processing part (122), on an instrument or an article yard at which an article as a target for transportation is present at the time and an instrument or an article yard at which the article is to be present next. If a deadlock is detected to occur, the deadlock detection resolution processing part changes a transportation destination of at least one article involved in the deadlock to a previously-prepared temporal yard.

## Description

### TECHNICAL FIELD

The present invention relates to a technique of article transportation simulation concerning transportation of an article at an operation site for manufacturing, constructing, mounting, or the like, a technique of article transportation schedule planning, and a technique of article yard designing support, to the latter two of which the technique of article transportation simulation is applied.

### BACKGROUND ART

In an operation site for manufacturing, constructing, mounting, or the like in which a plurality of articles are machined, assembled, and transported, there is an upper limit to a capacity of an article yard in which the articles are placed (the number of articles or the like) because of a limited area of the operation site. With the upper limit to the article yard capacity, when, for example, the number of machining or transportation-waiting articles in the article yard reaches the upper limit capacity, other articles to be transported to the article yard have to wait and stay at where they are, such as an instrument or an article yard as a transportation source.

If such a standby state of an article or an occupation state of an article yard further proceeds, a state where a plurality of different articles require each other the same instrument or article yard which has already been occupied (the state to be hereinafter referred to as a deadlock) occurs in some cases. If a deadlock occurs, machining or transportation of an article cannot make further progress, and a throughput of transportation or production is decreased. This results in a decline in productivity or a delay in construction schedule. A control technique of preventing and resolving such a deadlock is thus important in industrial, construction, and other fields.

For example, Patent Document 1 discloses a technique of estimating a deadlock and planning an article transportation schedule in which no deadlock occurs, making use of a time-series simulation of transporting an article focusing on a manufacturing site. The article transportation schedule used herein means information indicating, for each article, a start time of an operation using the article or a transportation of the article; an instrument or an article yard as a transportation destination in which the article is used; and the like.

Patent Document 1 discloses how to prepare an article transportation schedule as follows: (1) estimate whether or not a deadlock occurs using a simulation of a time-series article flow at an operation site (to be hereinafter referred to as an article flow simulation), and, if a deadlock is detected therein; (2) turn the article flow simulation back to a time when an article responsible for the deadlock was transported to an article yard; (3) cancel the transportation of the article and transport another article to the article yard; and (4) repeat (1) to (3) until no deadlock occurs and employ acquired results of the article flow simulation as an article transportation schedule.

Note that a generally-used method of detecting a deadlock includes a method based on graph theory as disclosed in Non-Patent Document 1.

### RELATED ART DOCUMENT

### PATENT DOCUMENT

Patent Document 1: Japanese Laid-Open Patent Application, Publication No. H08-123863

### NON-PATENT DOCUMENT

Non-Patent Document 1: M. Krishnamurthi and two others, "DEADLOCK DETECTION AND RESOLUTION IN SIMULATION MODELS", Proceeding of the 1994 Winter Simulation Conference, pp. 708-715 (1994)

### SUMMARY OF THE INVENTION

### PROBLEM TO BE SOLVED BY THE INVENTION

In the method of preparing an article transportation schedule disclosed in Patent Document 1, timing of the transportation of an article is delayed in many cases so as not to cause a deadlock. This can easily lead to a decline in productivity or a delay in construction schedule. Additionally, Non-Patent Document 1 does not make any description on resolution of the deadlock.

The present invention has been made in an attempt to provide a technique which makes it possible to plan an article transportation schedule capable of resolving a deadlock and reducing a decline in productivity or a delay in construction schedule in transporting an article at an operation site for manufacturing, construction, mounting, or the like.

### MEANS FOR SOLVING THE PROBLEM

An article transportation simulation apparatus of the present invention which simulates how a plurality of articles are transported between a plurality of instruments or article yards includes:
(1) a storage unit that stores therein: operation process route information which is information, for each article, on a route of an operation process to which the article is subjected and which includes information on an order of operations of the operation process; instrument and article yard information which is information, for each operation process, on an instrument and an article yard required in the operation process; operation time information which is information, for each article and each operation process, on a time required for completing an operation and in which the operation time is associated with the article and the operation process; transportation time information which is information on a time for transporting an article between article yards or instruments, operation in-progress information which is information on an operation being in progress and which includes information on an order of the operations in progress of an operation process for an article; and temporal yard information which is information on a temporarily-available temporal yard for each of all or part of an operation process and in which the temporal yard is associated with the operation process;
(2) an article flow simulation processing part that, while a simulation time is made to advance, computes, for each of the advanced simulation time, information, for each article, on a status of an operation to which the article is subjected, an instrument or an article yard at which the article is present, and an instrument or an article yard at which the article is to be present next, based on the operation in-progress information, the operation process route information, the instrument and article yard information, the operation time information, and the transportation time information; and
(3) a deadlock detection resolution processing part that, when the article is transported from the instrument or the article yard at which the article is present at that time, to the instrument or the article yard at which the article is to be present next, determines, for each of the simulation time, whether or not a deadlock occurs, to thereby detect a deadlock, and, if a deadlock is determined to occur, then, with respect to at least one of articles involved in the deadlock, changes the article yard at which the article is to be present next, to one of temporal yards specified by the temporal yard information so as to resolve the deadlock.

In the present invention, a temporal yard available for each of operation processes is set beforehand. When a deadlock is detected in transporting an article to an article yard by a deadlock detection resolution processing part, a transportation destination of at least one of articles involved in the deadlock is switched to a temporal yard, to thereby resolve the deadlock. Thus, even if the deadlock occurs, the transportation operation itself is not delayed. This can reduce a decline in productivity or a delay in construction schedule.

### ADVANTAGEOUS EFFECTS OF THE INVENTION

In the present invention, in transporting an article in an operation site for manufacturing, construction, mounting, or the like, an article transportation schedule can be planned in which a deadlock is resolved and a decline in productivity or a delay in construction schedule is reduced.

### BRIEF DESCRIPTION OF THE DRAWINGS

FIG. 1 is a diagram illustrating an example of an entire hardware configuration of an article transportation schedule planning system according to an embodiment of the present invention.
FIG. 2 is a diagram illustrating an example of a functional block configuration of an article transportation schedule planning apparatus according to the embodiment of the present invention.
FIG. 3 is a diagram illustrating an example of an operation process in which a material for an article is machined and is manufactured into the article meeting a specification as ordered according to the embodiment.
FIG. 4 is a diagram illustrating a configuration example of an article information table stored in a storage unit according to the embodiment.
FIG. 5 is a diagram illustrating a configuration example of an operation process route information table stored in the storage unit according to the embodiment.
FIG. 6 is a diagram illustrating a configuration example of an instrument information table stored in the storage unit according to the embodiment.
FIG. 7 is a diagram illustrating a configuration example of an article yard information table stored in the storage unit according to the embodiment.
FIG. 8 is a diagram illustrating a configuration example of a temporal yard information table stored in the storage unit according to the embodiment.
FIG. 9 is a diagram illustrating a configuration example of an operation time information table stored in the storage unit according to the embodiment.
FIG. 10 is a diagram illustrating a configuration example of a transportation time information table stored in the storage unit according to the embodiment.
FIG. 11 is a diagram illustrating a configuration example of a layout information table stored in the storage unit according to the embodiment.
FIG. 12 is a diagram illustrating a configuration example of an in-progress information table stored in the storage unit according to the embodiment.
FIG. 13 is a diagram illustrating a configuration example of a parameter information table stored in the storage unit according to the embodiment.
FIG. 14 is a diagram illustrating a configuration example of an article transportation schedule information table stored in the storage unit according to the embodiment.
FIG. 15 is an example of a flowchart of an article flow simulation processing executed by an article flow simulation processing part according to the embodiment.
FIG. 16 is a diagram illustrating an example of a detailed flowchart of an instrument allocation processing according to the embodiment.
FIG. 17 is a diagram illustrating an example of a detailed flowchart of an operation number update processing according to the embodiment.
FIG. 18 is a diagram illustrating an example of a detailed flowchart of a deadlock detection/resolution processing according to the embodiment.
FIG. 19 is a diagram illustrating an example of a detailed flowchart of an occupation relationship acquisition processing used in the deadlock detection/resolution processing according to the embodiment.
FIG. 20 is a diagram illustrating a configuration example of an occupation-requirement relationship information table acquired in the occupation relationship acquisition processing according to the embodiment.
FIG. 21 is a diagram illustrating an example of an article yard and temporal yard setting screen according to the embodiment.
FIG. 22 is a diagram illustrating an example of a layout setting screen according to the embodiment.
FIG. 23A and FIG. 23B are diagrams each illustrating examples of an article yard and layout setting screen and an article yard setting screen, respectively, according to the embodiment.
FIG. 24 is a diagram illustrating an example of a parameter setting screen according to the embodiment.
FIG. 25 is a diagram illustrating an example of an article transportation schedule information table display screen according to the embodiment.
FIG. 26 is a diagram illustrating an example of a temporal yard usage counting display screen according to the embodiment.

### EMBODIMENTS FOR CARRYING OUT THE INVENTION

Next is described an embodiment of the present invention with reference to related drawings.

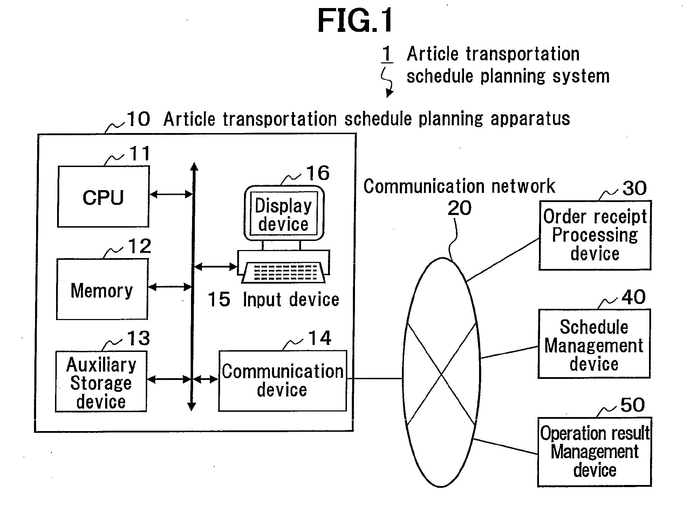

FIG. 1 is a diagram illustrating an example of an entire hardware configuration of an article transportation schedule planning system according to an embodiment of the present invention. As shown in FIG. 1, an article transportation schedule planning system 1 includes an article transportation schedule planning apparatus 10, an order receipt processing device 30, a schedule management device 40, and an operation result management device 50, which are communicably connected to each other via a communication network 20.

The article transportation schedule planning apparatus 10 is a principal component of the article transportation schedule planning system 1 and creates an article transportation schedule for manufacturing, constructing, and mounting, or the like in an operation site. Detailed configuration and operations of the article transportation schedule planning apparatus 10 will be described hereinafter.

The order receipt processing device 30 manages information on receipt of an order of a product or the like, and, on a prescribed time basis or on a request from the article transportation schedule planning apparatus 10, transmits the order receipt information on the requested product, to the article transportation schedule planning apparatus 10.

The schedule management device 40 manages various types of information on a schedule, and, on a prescribed time basis or on a request from the article transportation schedule planning apparatus 10, transmits information on an operation process route, an instrument, an article yard, a temporal yard, an operation time, a layout, and the like, to the article transportation schedule planning apparatus 10.

The operation result management device 50 collects and manages information on results of various operations in an operation site, and, on a prescribed time basis or on a request from the article transportation schedule planning apparatus 10, transmits information on the requested operation result, to the article transportation schedule planning apparatus 10.

The article transportation schedule planning apparatus 10 is embodied by a generally-available computer and, as shown in FIG. 1, includes as hardware: a CPU (Central Processing Unit) 11; a memory 12; an auxiliary storage device 13 embodied by a hard disk storage device, a DVD (Digital Versatile Disk) drive device, or the like; a communication device 14 embodied by a NIC (Network Interface Card) or the like for connecting to the communication network 20; an input device 15 embodied by a keyboard, a mouse, or the like; and a display device 16 embodied by a liquid crystal panel or the like. Similarly, the order receipt processing device 30, the schedule management device 40, and the operation result management device 50 are each embodied by a generally-available computer.

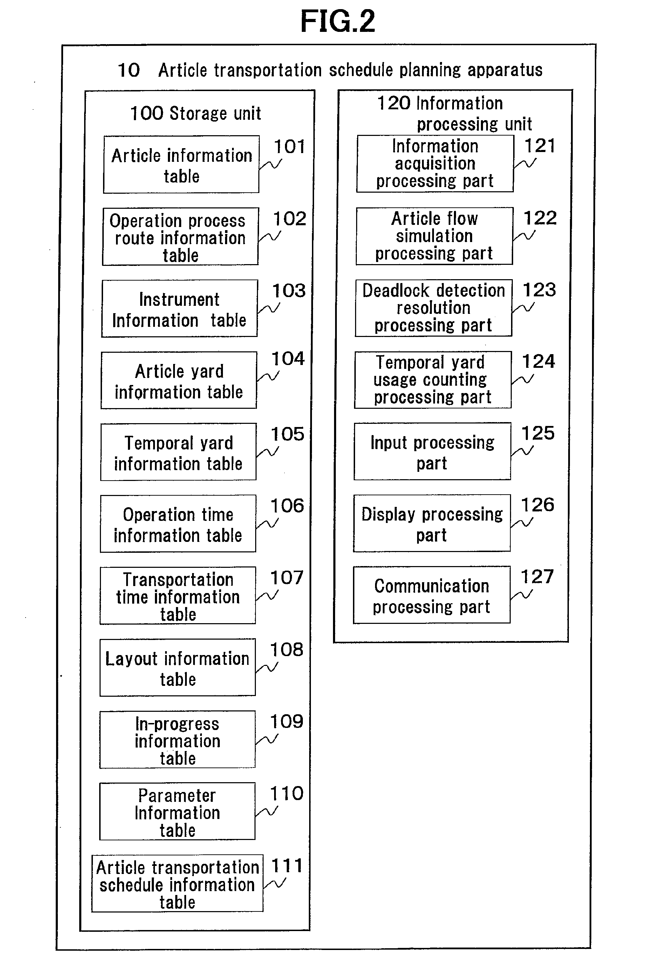

FIG. 2 is a diagram illustrating an example of a functional block configuration of the article transportation schedule planning apparatus 10 according to the embodiment of the present invention. As shown in FIG. 2, the article transportation schedule planning apparatus 10 includes a storage unit 100 and an information processing unit 1-20.

The storage unit 100 includes various types of information tables such as an article information table 101, an operation process route information table 102, an instrument information table 103, an article yard information table 104, a temporal yard information table 105, an operation time information table 106, a transportation time information table 107, a layout information table 108, an in-progress information table 109, a parameter information table 110, and an article transportation schedule information table 111. Note that those various information tables are realized by storage areas set in the memory 12 or the auxiliary storage device 13 (see FIG. 1).

The information processing unit 120 includes such lower-level functional blocks as an information acquisition processing part 121, an article flow simulation processing part 122, a deadlock detection resolution processing part 123, a temporal yard usage counting processing part 124, an input processing part 125, a display processing part 126, and a communication processing part 127. Note that functions of those functional blocks are realized when the CPU 11 executes a prescribed program pre-stored in the memory 12.

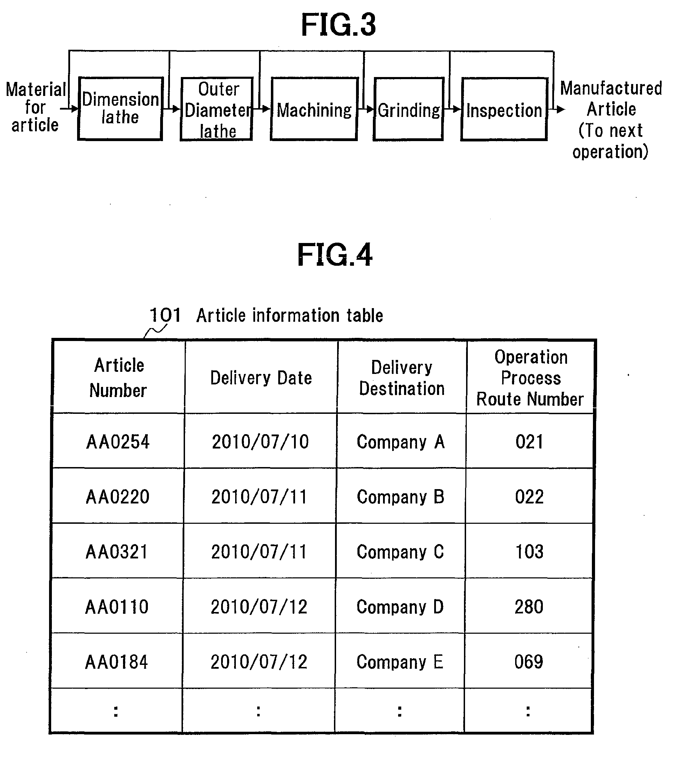

FIG. 3 is a diagram illustrating an example of an operation process in which a material for an article is machined and is manufactured into the article meeting a specification as ordered. As shown in FIG. 3, the operation process includes, for example, operations of dimension lathe, outer diameter lathe, machining, grinding, and inspection. More specifically, when such an article having a specification as ordered is manufactured, the article passes through at least one of those operations. Typically, an article passes through a plurality of operation processes once or a plurality of times. Note that the term "article" used in this Specification is collectively referred to an article in any state of from a material to a product having a specification as ordered, includes a state being in process.

Next are described details of the functional blocks of the article transportation schedule planning apparatus 10 according to this embodiment. Description is made assuming that an article to be transported is manufactured in the operation process shown in FIG. 3. Configurations of various information tables stored in the storage unit 100 are to be explained first below.

FIG. 4 is a diagram illustrating a configuration example of the article information table 101 stored in the storage unit 100. The article information table 101 is information on an article and includes, for each article, information on a delivery date, a delivery destination, an operation process route, or the like of the article, which are associated with one another. More specifically, rows of the article information table 101 each contain such fields as "Article Number", "Delivery Date", "Delivery Destination", and "Operation Schedule Route Number".

In the field of "Article Number", a number of an article for identifying the article is stored. In the field of "Delivery Date", information on a delivery date of the article identified by an article number in the field of "Article Number" corresponding thereto is stored. In the field of "Operation Schedule Route Number", an operation process route number for identifying an operation process route of the appropriate article is stored.

Note that it is not necessary for the delivery date to be identified by the year, month, and day. Regarding the operation process route number, a number is uniquely identifiable is assigned to each of different operation process routes.

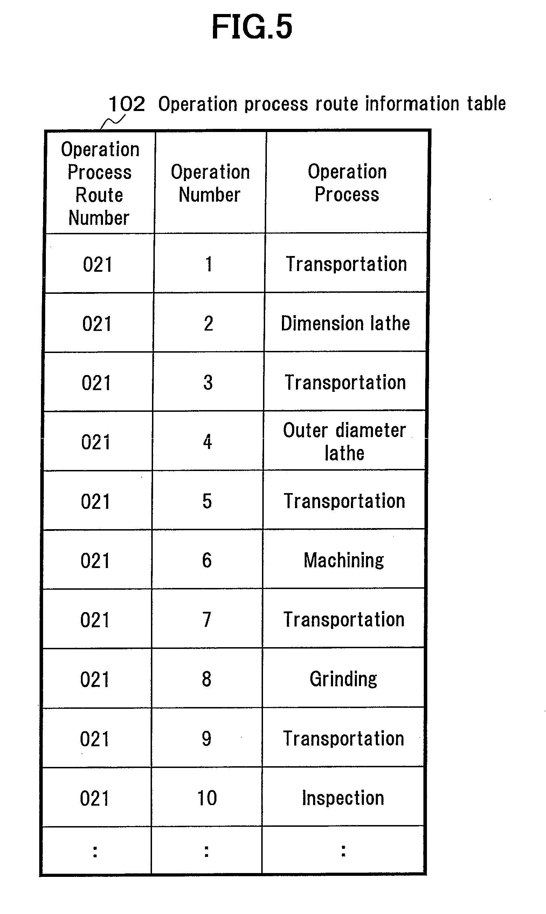

FIG. 5 is a diagram illustrating a configuration example of the operation process route information table 102 stored in the storage unit 100. The operation process route information table 102 is information on a route of an operation process, in which an operation process route number used in the article information table 101 is defined to a specific operation process route. More specifically, rows of the operation process route information table 102 each contain such fields as "Operation Schedule Route Number", "Operation Number", and "Operation Process".

In the field of "Operation Schedule Route Number", an operation process route number for identifying an operation process route is stored. In the field of "Operation Number", serial numbers in ascending order for identifying an order of an operation for each of the operation process route numbers is stored. In the field of "Operation Process", information identifying an operation process (for example, a name of the operation process) is stored.

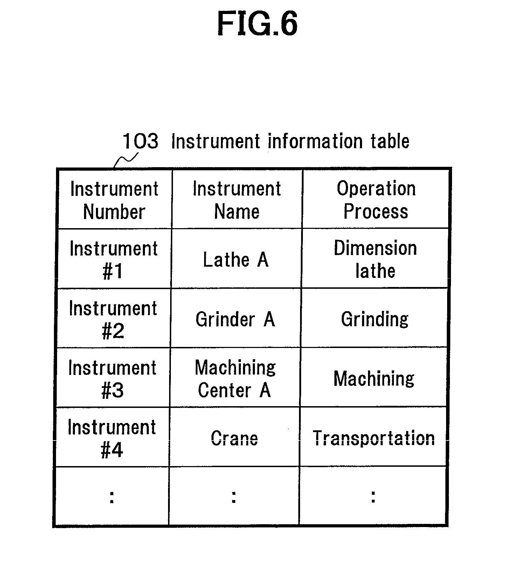

FIG. 6 is a diagram illustrating a configuration example of the instrument information table 103 stored in the storage unit 100. The instrument information table 103 is information on an instrument, in which an instrument is associated with an operation process in which the instrument is used. More specifically, rows of the instrument information table 103 each contain such fields as "Instrument Number", "Instrument Name", and "Operation Process".

In the field of "Instrument Number", a number for identifying an instrument is stored. In the field of "Instrument Name", a name of the instrument identified by the field of "Instrument Number" corresponding thereto is stored. In the field of "Operation Process", information identifying an operation process in which the instrument is used (for example, a name of the operation process) is stored.

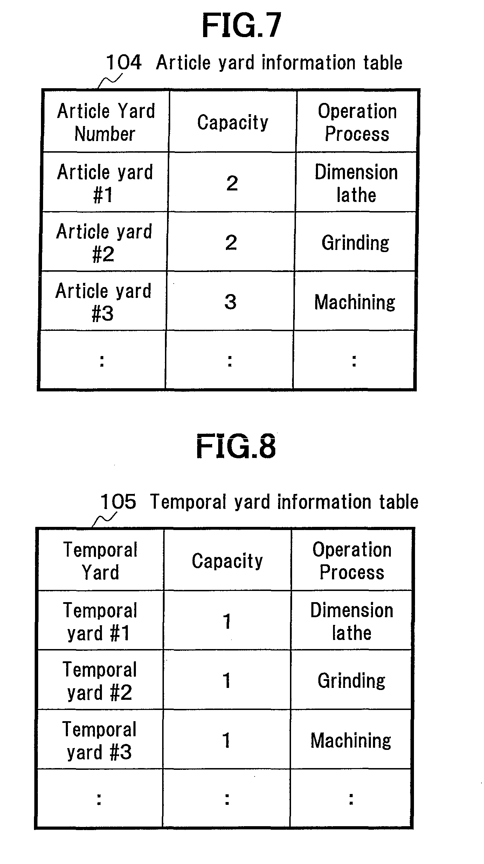

FIG. 7 is a diagram illustrating a configuration example of the article yard information table 104 stored in the storage unit 100. The article yard information table 104 is information on an article yard, in which an article yard is associated with a capacity of the article yard and an operation process performed at the article yard. More specifically, rows of the article yard information table 104 each contain such fields as "Article Yard Number", "Capacity", and "Operation Process".

In the field of "Article Yard Number", a number of an article yard for identifying the article yard is stored. In the field of "Capacity", a capacity of the article yard identified by the field of "Article Yard Number" corresponding thereto is stored. In the field of "Operation Process", information identifying an operation process performed at the article yard (for example, a name of the operation process) is stored.

Note that the capacity used in this embodiment is defined as the number of articles which can be placed in an article yard. However, the definition of the capacity is not limited to this. For example, in a case where sizes of articles are different depending on their types, the capacity may be defined as an area or a volume occupied by the articles. The number of articles which can be placed in an article yard may be variable.

FIG. 8 is a diagram illustrating a configuration example of the temporal yard information table 105 stored in the storage unit 100. The temporal yard information table 105 is information on a temporal yard, in which a temporal yard is associated with a capacity of the temporal yard and an operation process performed at the temporal yard. More specifically, rows of the temporal yard information table 105 each contain such fields as "Temporal Yard Number", "Capacity", and "Operation Process".

In the field of "Temporal Yard Number", a number of a temporal yard for identifying the temporal yard is stored. In the field of "Capacity", a capacity of the temporal yard identified by the field of "Temporal Yard Number" corresponding thereto is stored. In the field of "Operation Process", information identifying an operation process performed at the temporal yard corresponding thereto (for example, a name of the operation process) is stored.

Note that the capacity used in this embodiment is defined as the number of articles which can be placed in an article yard. However, the definition of the capacity is not limited to this. For example, in a case where sizes of articles are different depending on their types, the capacity may be defined as an area or a volume occupied by the articles. The number of articles which can be placed in a yard may be variable.

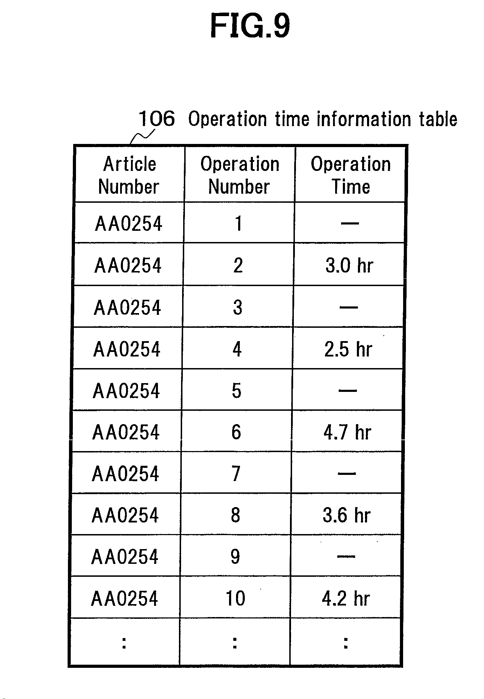

FIG. 9 is a diagram illustrating a configuration example of the operation time information table 106 stored in the storage unit 100. The operation time information table 106 is information on an average operation time required for completing an operation in an operation process specified by an operation number of an article. More specifically, rows of the operation time information table 106 each contain such fields as "Article Number", "Operation Number", and "Operation Number".

In the field of "Article Number", an article number for identifying an article as a target for an operation is stored. In the field of "Operation Number", an operation number of an article identified by the field of "Article Number" corresponding thereto is stored (an article number and an operation number are linked to each other in the field of "Operation Schedule Route Number" shown in FIG. 4 and FIG. 5). In the field of "Operation Time", an average operation time required for completing an operation in an operation process identified by the operation process number identified by the field of "Operation Number" corresponding thereto, with respect to an article identified by the field of "Article Number" corresponding thereto, is stored. In a case, however, where the operation number refers to an operation of "Transportation", "-" is stored in the field of "Operation Time" of a row of interest.

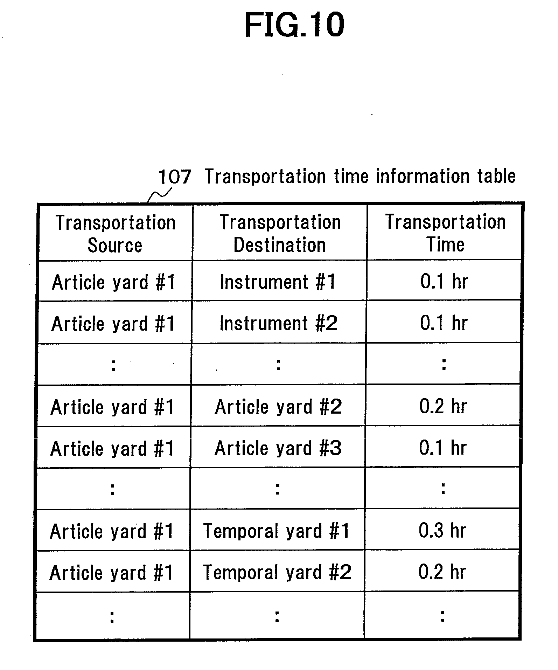

FIG. 10 is a diagram illustrating a configuration example of the transportation time information table 107 stored in the storage unit 100. The transportation time information table 107 is information on a transportation time required for transporting an article from an article yard, a temporal yard, or an instrument as a transportation source, to an article yard, a temporal yard, or an instrument as a transportation destination. More specifically, rows of the transportation time information table 107 each contain "Transportation Source", "Transportation Destination", and "Transportation Time".

In the field of "Transportation Source", a number of an article yard, a temporal yard, or an instrument as a transportation source of an article is stored. In the field of "Transportation Destination", a number of an article yard, a temporal yard, or an instrument as a transportation destination of the article is stored. In the field of "Transportation Time", a transportation time required for transporting the article from the article yard, the temporal yard, or the instrument specified by the field of "Transportation Source" corresponding thereto, to the article yard, the temporal yard, or the instrument specified by the field of "Transportation Destination" corresponding thereto.

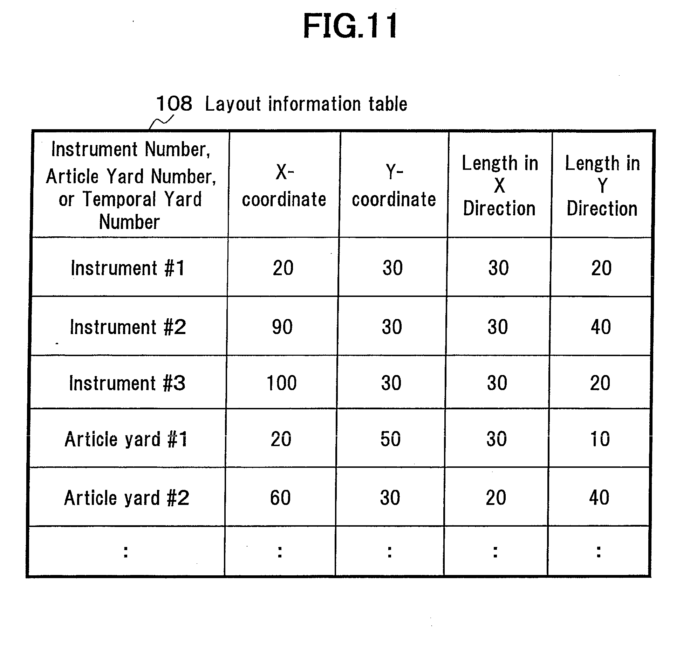

FIG. 11 is a diagram illustrating a configuration example of the layout information table 108 stored in the storage unit 100. The layout information table 108 is information on a position and a size of an instrument, an article yard, or a temporal yard on an operation site layout plan. More specifically, rows of the layout information table 108 each contain such fields as "Instrument Number, Article Yard Number, or Temporal Yard Number", "X-coordinate", "Y-coordinate", "Length in X Direction", and "Length in Y Direction".

In the field of "Instrument Number, Article Yard Number, or Temporal Yard Number", information for identifying an instrument, an article yard, or a temporal yard is stored. In the fields of "X-coordinate" and "Y-coordinate", an X-coordinate and a Y-coordinate indicating a position of the instrument, the article yard, or the temporal yard on the layout plan are stored, respectively. In the fields of "Length in X Direction" and "Length in Y Direction", a length in the X direction and a length in the Y direction of a rectangle representing a size of the instrument, the article yard, or the temporal yard are stored, respectively.

Note that the information on layout is herein presented in form of the layout information table 108. However, the information on layout may be presented as attribute information included in information on a two-dimensional or three-dimensional layout plan such as, for example, detailed information on an instrument thereof.

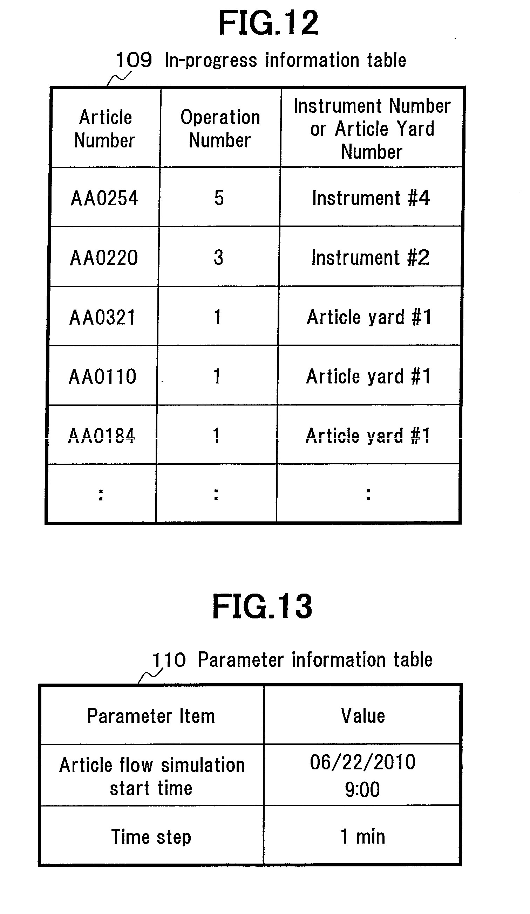

FIG. 12 is a diagram illustrating a configuration example of the in-progress information table 109 stored in the storage unit 100. The in-progress information table 109 is information on an instrument or an article yard required when an article is subject to an operation process. More specifically, rows the in-progress information table 109 each contain such fields as "Article Number", "Operation Number", and "Instrument Number or Article Yard Number".

In the field of "Article Number", a number of an article targeted to enter into an operation process is stored. In the field of "Operation Number", a number of an operation on an operation process route of the article identified by the field of "Article Number" corresponding thereto is stored. In the field of "Instrument Number or Article Yard Number", a number of an instrument or an article yard with respect to which the article or the article yard identified by the field of "Article Number" corresponding thereto is in progress is stored.

FIG. 13 is a diagram illustrating a configuration example of the parameter information table 110 stored in the storage unit 100. The parameter information table 110 stores therein a parameter for identifying an execution condition for an article flow simulation. More specifically, the parameter information table 110 contains fields of "Parameter Item" and "Value".

In the field of "Parameter Item", an item name of a parameter required for executing a processing performed by the article flow simulation processing part 122 (see FIG. 2), such as "Article flow simulation start time" and "Time step" is stored. In the field of "Value", a value of the parameter identified by the "Parameter Item" is stored.

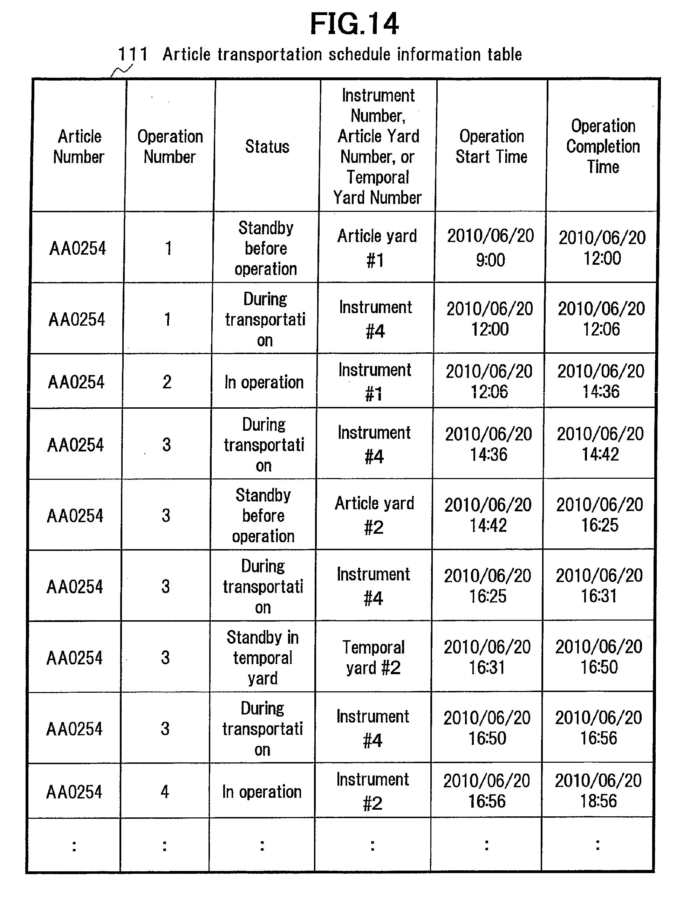

FIG. 14 is a diagram illustrating a configuration example of the article transportation schedule information table 111 stored in the storage unit 100. The article transportation schedule information table 111 stores therein article transportation schedule information which is created by a processing performed by the article flow simulation processing part 122. The article transportation schedule information includes information identifying when and at which instrument an operation process of an article is performed and information identifying when and to which article yard or temporal yard the article is transported. More specifically, rows of the article transportation schedule information table 111 each contain such fields as "Article Number", "Operation Number", "Status", "Instrument Number, Article Yard Number, or Temporal Yard Number", "Operation Start Time", and "Operation Completion Time".

In the field of "Article Number", an article number for identifying an article as a target for transportation is stored. In the field of "Operation Number", an operation number on an operation process route of the article identified by the field of "Article Number" corresponding thereto is stored. In the field of "Status", information representing a status of the operation process of the article identified by the fields of "Article Number" and "Operation Number" corresponding thereto (to be hereinafter referred to as an operation process for the article), such as "In operation" and "Standby before operation" is stored. In the field of "Instrument Number, Article Yard Number, or Temporal Yard Number", an identification number for identifying an instrument, an article yard, or a temporal yard used in the operation process for the article is stored. In the fields of "Operation Start Time" and "Operation Completion Time", an operation start time and an operation completion time of the operation process for the article acquired from the processing performed by the article flow simulation processing part 122 are stored.

For example, in the second row of the article transportation schedule information table 111 shown in FIG. 14, an article having an article number "AA0254" is to be subjected to an operation process having an operation number "1", which is planned to start at "12:00 on 2010/06/20" and to complete "12:06 on 2010/06/20". In this case, the operation process having the operation number "1" is found to be "Transportation" in a manner as follows: search the article information table 101 using the article number "AA0254" as a key, to thereby acquire an operation process route number "021"; and then, search the operation process route information table 102 using the operation process route number "021" and the operation number "1" as keys, to thereby find "Transportation". Further, a transportation source of the article subjected to the operation of "Transportation" is also found to be "Article yard #1" based on data in the first row. A transportation destination thereof is found to be "Instrument #4" based on data in the second row. A status of the operation of "Transportation" is found to be "Under transportation", that is, the article is now being transported, based on a data in the second row.

Referring back to FIG. 2, next are briefly described operations of the functional blocks included in the information processing unit 120.

The information acquisition processing part 121 acquires various types of information inputted via the communication network 20 from the order receipt processing device 30, the schedule management device 40, and the operation result management device 50, and stores the information in an appropriate information table in the storage unit 100. For example, the information acquisition processing part 121 acquires such information as an article number, a delivery date, a delivery destination, and an operation process route number to be stored in an appropriate row of the article information table 101, from the order receipt processing device 30, and stores the acquired information in the article information table 101. As another example, the information acquisition processing part 121 acquires, from the schedule management device 40, information to be stored in an appropriate row of the operation process route information table 102, the instrument information table 103, the article yard information table 104, the temporal yard information table 105, the operation time information table 106, and the layout information table 108, and stores therein the acquired information. As still another example, the information acquisition processing part 121 acquires, from the operation result management device 50, information to be stored in an appropriate row of the in-progress information table 109, and stores therein the acquired information.

The information acquisition processing part 121 may actively acquire predetermined information from the order receipt processing device 30, the schedule management device 40, or the operation result management device 50 at predetermined timing, and store the acquired information in any of the information tables. Alternatively, the information acquisition processing part 121 may passively acquire information when the information is transmitted thereto from any of the above-mentioned devices, and store the acquired information in any of the appropriate information tables.

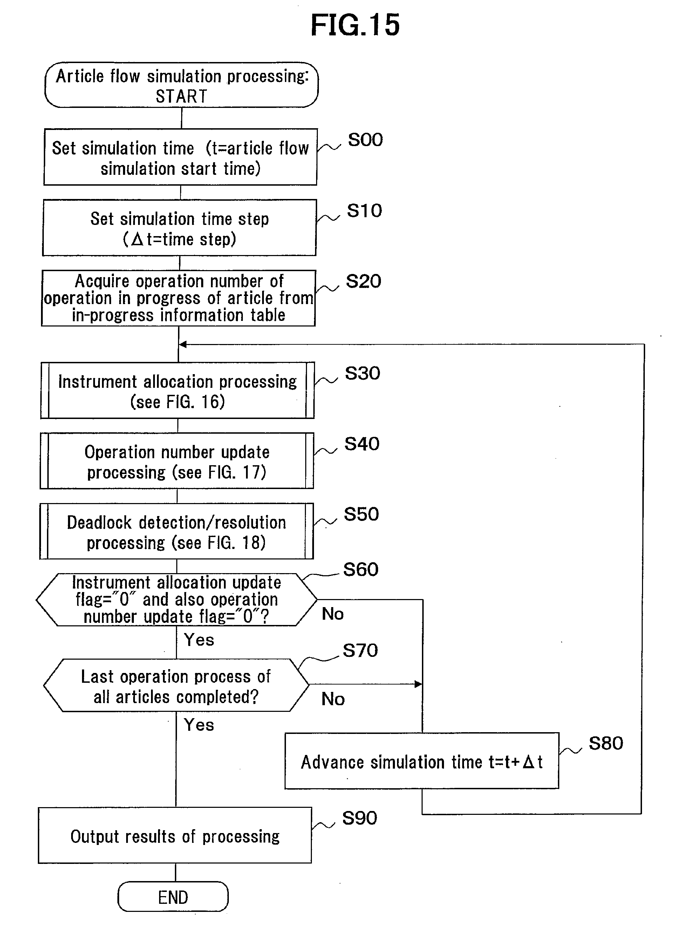

The article flow simulation processing part 122 simulates a flow of an article in an operation site, calculates an operation start time and an operation completion time of an operation process with respect to the article, and stores the calculated results in the article transportation schedule information table 111. Details of such processings performed herein will be described later with reference to FIG. 15 to FIG. 19.

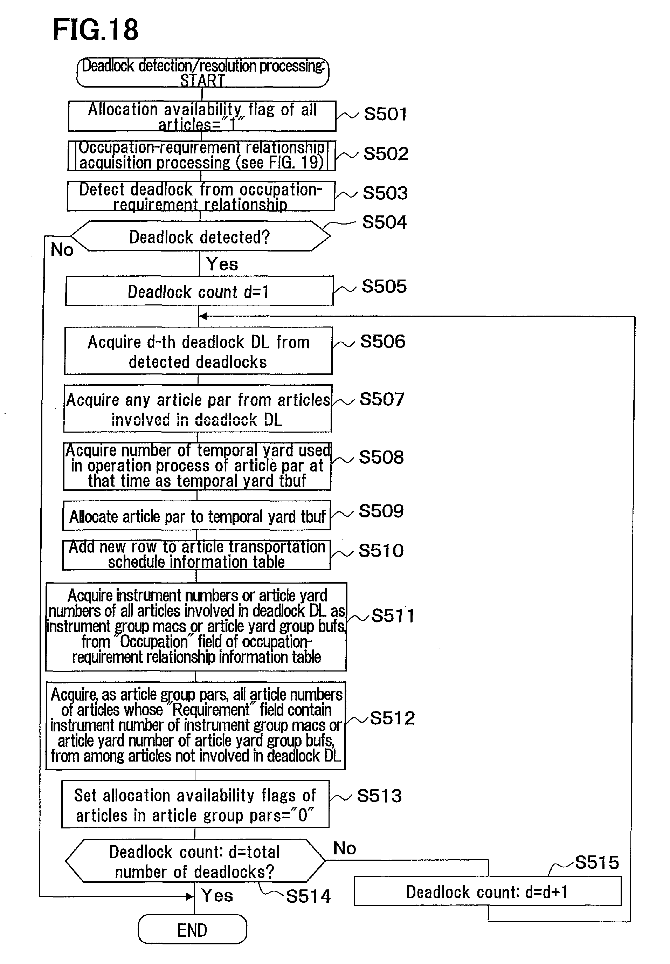

If a deadlock occurs when the article flow simulation processing part 122 is running a simulation, the deadlock detection resolution processing part 123 detects the deadlock in the simulation, resolves the detected deadlock by temporarily transporting an article responsible for the deadlock to a temporal yard, and stores results of such processings in the article transportation schedule information table 111. Details of the processings performed herein will be described later with reference to FIG. 18.

The temporal yard usage counting processing part 124 references the information stored in the article transportation schedule information table 111 and thereby computes how many times the temporal yard is used for resolving deadlocks.

The input processing part 125 receives information inputted and set by a user of the article transportation schedule planning apparatus 10 via the input device 15, into the article yard information table 104, the temporal yard information table 105, the layout information table 108, or the parameter information table 110.

The display processing part 126 displays contents of the tables stored in the storage unit 100, in the display device 16, and outputs results of a processing performed by the information processing unit 120 to the display device 16. For example, the display processing part 126 displays the article transportation schedule information table 111 as results of a processing executed by the article flow simulation processing part 122 and also displays how many times the temporal yard is used as a result of a processing executed by the temporal yard usage counting processing part 124.

The communication processing part 127 executes a communication control processing to the communication network 20 in response to an instruction from the information acquisition processing part 121, and thereby transmits and receives information to and from the order receipt processing device 30, the schedule management device 40, or the operation result management device 50.

Next are described processings performed by the article flow simulation processing part 122 and the deadlock detection resolution processing part 123, which are major processings of the article transportation schedule planning apparatus 10 (see FIG. 1), with reference to related flowcharts.

FIG. 15 is an example of a flowchart of an article flow simulation processing executed by the article flow simulation processing part 122. In performing the article flow simulation processing, such methods as a time-driven simulation and an event-driven simulation are employed. In this embodiment, description is made assuming that the time-driven simulation is used. However, how the processing is performed in this embodiment is not limited to the time-driven simulation, and the event-driven simulation or any other method may be used.

As shown in FIG. 15, the CPU 11 of the article transportation schedule planning apparatus 10 (see FIG. 1, which may be simply referred to as the CPU 11 hereinafter) acquires a value of an article flow simulation start time from the parameter information table 110 in which the value is preset, and sets the acquired value for a simulation time t (step S00). The CPU 11 also acquires a value of a time step from the parameter information table 110 and sets the acquired value for a time step Δt (step S10).

The simulation time t and the time step Δt are a value representing a current time of an article flow simulation which is currently running, and a time-incremental value for advancing the current time, respectively. The values of the simulation time t and the time step Δt are stored in a work area (not shown) reserved in the memory 12.

The CPU 11 then acquires an operation number of an operation in progress of an article from the in-progress information table 109 (step S20). If the in-progress information table 109 has no information on the article, the CPU 11 sets the operation number to 1.

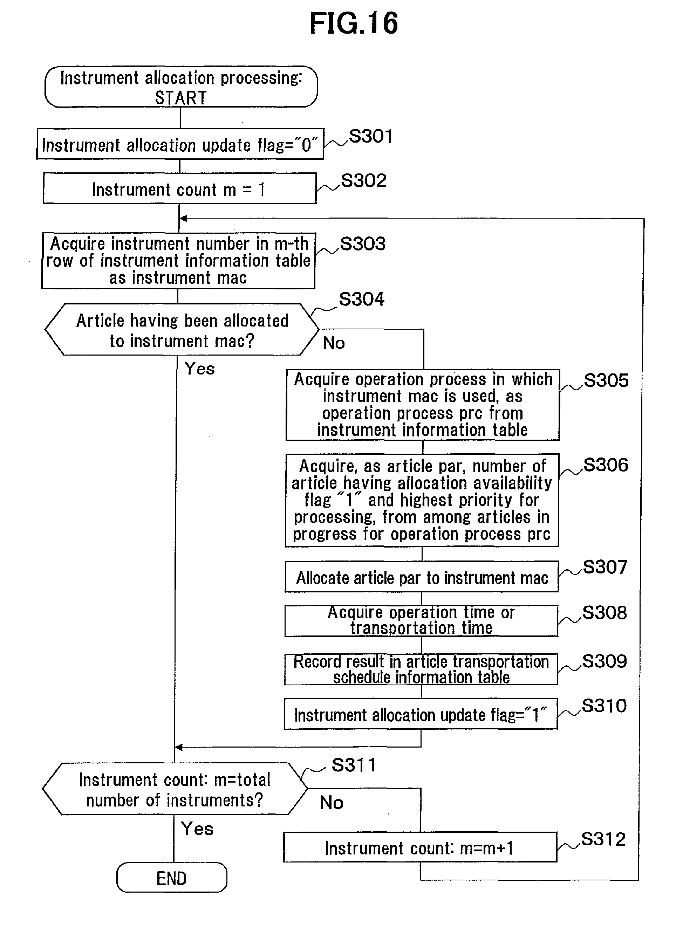

The CPU 11 executes an instrument allocation processing (step S30), an operation number update processing (step S40), and a deadlock detection/resolution processing (step S50). Note that the instrument allocation processing, the operation number update processing, and the deadlock detection/resolution processing will be described later in detail with reference to FIG. 16, FIG. 17, and FIG. 18, respectively.

The CPU 11 determines whether or not an instrument allocation update flag is "0", and at the same time, an operation number update flag is "0" (step S60). As a result of the determination, if the instrument allocation update flag is "0", and at the same time, the operation number update flag is "0" (if Yes in step S60), the CPU 11 advances the processing to step S70. On the other hand, if the instrument allocation update flag is "0", and at the same time, the operation number update flag is not "0" (if No in step S60), the CPU 11 advances the processing to step S80.

The instrument allocation update flag used herein is a variable to which "1" or "0" is set in the instrument allocation processing in step S30. In the instrument allocation processing, if at least one article is allocated to an instrument, the instrument allocation update flag is set to "1". On the other hand, no article is allocated to the instrument, the instrument allocation update flag is set to "0".

The operation number update flag is a variable to which "1" or "0" is set in the operation number update processing in step S40. In the operation number update processing, if an operation number in an operation process in progress with respect to at least one article is changed, the operation number update flag is set to "1". On the other hand, if no operation number in an operation process in progress with respect to any article is changed, the operation number update flag is set to "0". Note that the instrument allocation update flag and the operation number update flag is stored in a work area reserved in the memory 12.

In step S70, the CPU 11 determines whether or not the last operation process with respect to each of all articles has already been completed. As a result of the determination, if the last operation process of each of all of the articles has already been completed (if Yes in step S70), the CPU 11 advances the processing to step S90. On the other hand, if the last operation process of each of all of the articles has not yet been completed (if No in step S70), the CPU 11 advances the processing to step S80.

In step S80, the CPU 11 adds a time step Δt as a unit of simulation advancement, to a simulation time t at that time, in other words, advances the simulation time t by the time step Δt (step S80); returns the processing to step S30; and repeats execution of step S30 and its subsequent steps.

In step S90, the CPU 11 outputs results of the article flow simulation processing, for example, information contained in the article transportation schedule information table 111 to the display device 16 (step S90) and terminates the article flow simulation processing shown in FIG. 15.

FIG. 16 is an example of a detailed flowchart of the instrument allocation processing (step S30 of FIG. 15). As shown in FIG. 16, the CPU 11 sets the instrument allocation update flag to "0" (step S301) and also sets an instrument count m to an initial value of "1" (step S302). The instrument count m is stored in a work area reserved in the memory 12.

The CPU 11 acquires an instrument number in an m-th row of the instrument information table 103, as an instrument mac (step S303). The instrument mac is information identifying an instrument and acquired from the "Instrument Number" field of the instrument information table 103 (for example, Instrument #1 and Instrument #2).

The CPU 11 references the article transportation schedule information table 111 which has been created by a then-simulation time t, and determines whether or not an article has been allocated to the instrument mac (step S304). More specifically, the CPU 11 references the article transportation schedule information table 111, and, if there is a row whose field of "Instrument Number, Article Yard Number, or Temporal Yard Number" has a value identical to the instrument mac, and at the same time, whose field of "Operation Completion Time" is empty, then determines that an article has been allocated to the instrument mac. On the other hand, if there is no such row, the CPU 11 determines that no article has been allocated to the instrument mac.

As a result of the determination, if an article has been allocated to the instrument mac, (if Yes in step S304), the CPU 11 advances the processing to step S310. If no article has been allocated to the instrument mac (if No in step S304), the CPU 11 acquires an operation process in which the instrument mac is used, as an operation process prc (step S305) from the instrument information table 103.

The CPU 11 references the article transportation schedule information table 111 and thereby acquires, as an article par, a number of an article which has an allocation availability flag of "1", and at the same time, is given the highest priority for the processing, from among articles in progress for the operation process prc (step S306).

The allocation availability flag used herein is a variable taking a value of "1" or "0" which is set in the deadlock detection/resolution processing (step S50 in FIG. 15). If an article of interest, and an instrument or an article yard or a temporal yard as a transportation destination of the article are not included in a deadlock which is currently being resolved, "1" is set to the allocation availability flag. On the other hand, if included, "0" is set thereto. The priority for the processing is determined by, for example, a first-in first-out order or a delivery date order. In this embodiment, however, any method of determining the priority for the processing can be used.

The CPU 11 allocates the article par to the instrument mac (step S307) and acquires an operation time or a transportation time (step S308). More specifically, the CPU 11 references the instrument information table 103, and, if an operation process in which the instrument mac is used is not "Transportation", acquires an operation time from the operation time information table 106. If the operation process in which the instrument mac is used is "Transportation", the CPU 11 acquires, from the transportation time information table 107, a transportation time for transporting the article par from an instrument, an article yard, or a temporal yard to which the article par has been allocated prior to allocation in step S307, to an instrument, an article yard, or a temporal yard as a transportation destination.

The CPU 11 records information on the allocation in step S307, in the article transportation schedule information table 111 (step S309). More specifically, the CPU 11 adds a new row to the article transportation schedule information table 111 and stores in the row: the article par in the field of "Article Number"; an operation number for the article par in the field of "Operation Number"; a character string of "In operation" or "Under transportation" in the field of "Status"; the instrument mac in the field of "Instrument Number, Article Yard Number, or Temporal Yard Number"; and a then-simulation time t in the field of "Operation Start Time".

The CPU 11 sets the instrument allocation update flag to "1" (step S31 0) and determines whether or not the instrument count m is equal to the total number of the instruments included in the instrument information table 103 (step S311). As a result of the determination, if the instrument count m is not equal to the total number of the instruments (if No in step S311), the CPU 11 increments the instrument count m by 1 (step S312), returns the processing to step S303, and repeats execution of step S303 and its subsequent steps. On the other hand, if the instrument count m is equal to the total number of the instruments (if Yes in step S311), the CPU 11 terminates the instrument allocation processing of FIG. 16.

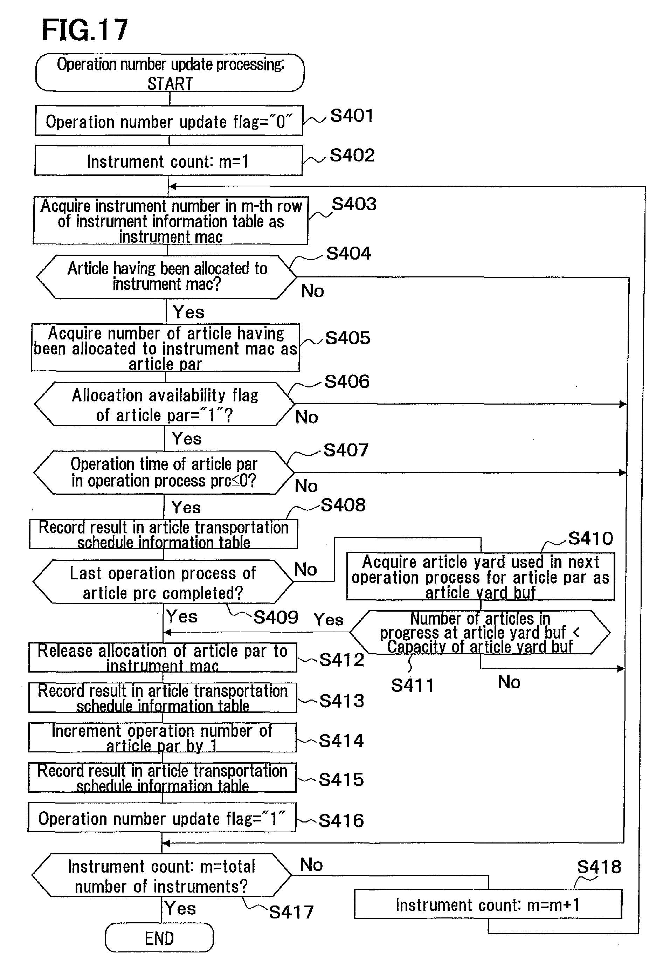

FIG. 17 is an example of a detailed flowchart of the operation number update processing (step S40 of FIG. 15). As shown in FIG. 17, the CPU 11 sets the operation number update flag to "0" (step S401) and also sets the instrument count m to an initial value of "1" (step S402).

The CPU 11 acquires an instrument number in a m-th row of the instrument information table 103, as the instrument mac (step S403), references the article transportation schedule information table 111 having been created by a then-simulation time t, and determines whether or not an article has been allocated to the instrument mac (step S404). As a result of the determination, if no article has been allocated to the instrument mac (if No in step S404), the CPU 11 advances the processing to step S417.

On the other hand, as the result of the determination, if an article has been allocated to the instrument mac (if Yes in step S404), the CPU 11 references the article transportation schedule information table 111 and acquires an article number of the article having been allocated to the instrument mac, as an article par (step S405).

The CPU 11 determines whether or not the allocation availability flag of the article par is "1" (step S406), and, if the allocation availability flag is not determined to be "1" (if No in step S406), advances the processing to step S417. On the other hand, if the allocation availability flag is determined to be "1" (if Yes in step S406), the CPU 11 further acquires, as an operation process prc, an operation process having an operation number corresponding to the article par, from the article information table 101 and the operation process route information table 102, and then determines whether or not an operation time of the article par in the operation process prc is 0 or less (step S407).

As a result of the determination, if the operation time of the article par in the operation process prc is not 0 or less (if No in step S407), the CPU 11 advances the processing to step S417. On the other hand, if the operation time of the article par in the operation process prc is 0 or less (if Yes in step S407), the CPU 11 records information indicating that the operation performed in the operation process prc with respect to the article par has been completed, in the article transportation schedule information table 111 (step S408).

More specifically, the CPU 11 extracts, from the article transportation schedule information table 111, such a row that the "Article Number" field has an article number identical to a number of the article par; the "Operation Number" field has a number identical to an operation number for the "article par"; and the "Status" field has a character string of "In operation", and stores a then-simulation time t in the "Operation Completion Time" field in the row. Further, the CPU 11 adds a new row to the article transportation schedule information table 111 and stores in the row: the article number of the article par in the "Article Number" field; the operation number of the article par in the "Operation Number" field; a character string of "Standby after operation" in the "Status" field; a number of the instrument mac in the "Instrument Number, Article Yard Number, or Temporal Yard Number" field; and a then-simulation time t in the "Operation Start Time" field.

The CPU 11 references the article information table 101 and the operation process route information table 102 and thereby determines whether or not the last operation process of the article par has been completed (step S409). If the last operation process of the article par is determined to have been completed (if Yes in step S409), the CPU 11 advances the processing to step S412. On the other hand, the last operation process of the article par is not determined to have been completed (if No in step S409), the CPU 11 references the article information table 101, the operation process route information table 102, and the article yard information table 104, and acquires therefrom, as an article yard buf, a number of an article yard in which the next operation process for the article par is performed (step S410).

The CPU 11 references the article transportation schedule information table 111 and the article yard information table 104 and thereby determines whether or not the number of articles in progress in the article yard buf is smaller than a capacity of the article yard buf (step S411). More specifically, the CPU 11 acquires, from the article transportation schedule information table 111, the number of row whose "Instrument Number, Article Yard Number, or Temporal Yard Number" field has a value identical to the article yard buf, and at the same time, whose "Operation Completion Time" field is empty, and determines the acquired number as the number of articles in progress in the article yard buf. The CPU 11 then determines whether or not the number of the articles in progress in the article yard buf is smaller than the capacity of the article yard buf.

As a result of the determination, if the number of the articles in progress in the article yard buf is not smaller than the capacity of the article yard buf (if No in step S411), the CPU 11 advances the processing to step S417. On the other hand, if the number of the articles in progress in the article yard buf is smaller than the capacity of the article yard buf (if Yes in step S411), the CPU 11 releases the allocation of the article par to the instrument mac (step S412) and records information on the release in the article transportation schedule information table 111 (step S413).

More specifically, the CPU 11 extracts, from the article transportation schedule information table 111, such a row that: the "Article Number" field has an article number identical to a number of the article par; the "Operation Number" field has an operation number identical to an operation number of the article par; the "Status" field has a character string of "Standby after operation"; the "Instrument Number, Article Yard Number, or Temporal Yard Number" field has a number identical to a number of the instrument mac, and stores a then-simulation time t in the "Operation Completion Time" field in the row.

The CPU 11 increments the operation number of the article par by 1 (step S414) and records information indicating that the article par has advanced to the next operation process by adding "1" to the operation number of the article par in the article transportation schedule information table 111 (step S415). More specifically, the CPU 11 adds a new row to the article transportation schedule information table 111 and stores in the row: an article number of the article par in the "Article Number" field; an operation number of the article par in the "Operation Number" field; a character string of "Standby before operation" in the "Status" field; a number of the article yard buf in the "Instrument Number, Article Yard Number, or Temporal Yard Number" field; and a then-simulation time t in the "Operation Start Time" field.

The CPU 11 sets the operation number update flag to "1" (step S416) and determines whether or not the instrument count m is equal to the total number of instruments included in the instrument information table 103 (step S417). As a result of the determination, if the instrument count m is not equal to the total number of instruments (if No in step S417), the CPU 11 increments the instrument count m by 1 (step S418), returns the processing to step S403, and repeats execution of step S403 and its subsequent steps. On the other hand, if the instrument count m is equal to the total number of instruments (if Yes in step S417), the CPU 11 terminates the operation number update processing of FIG. 17.

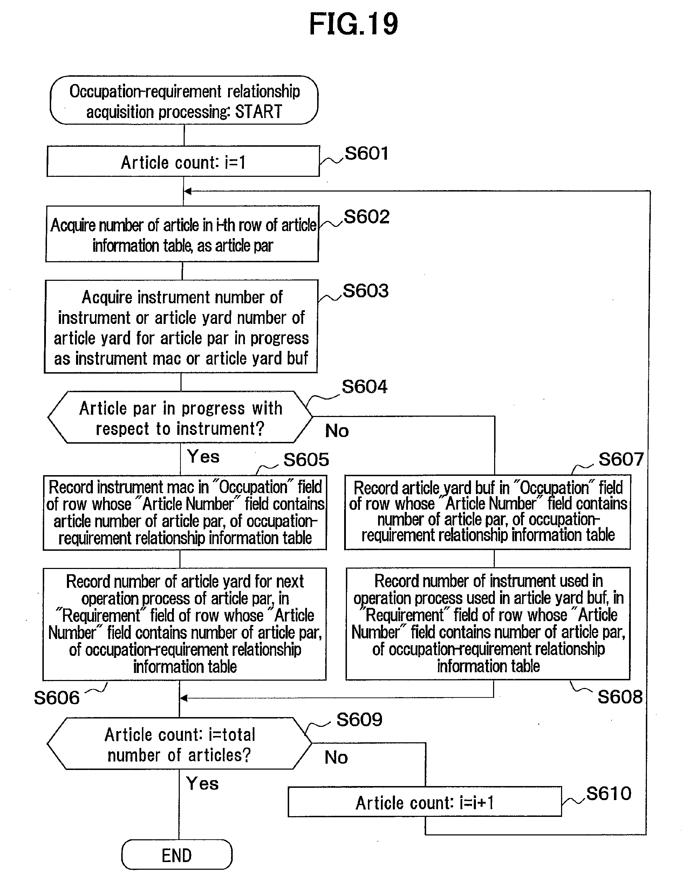

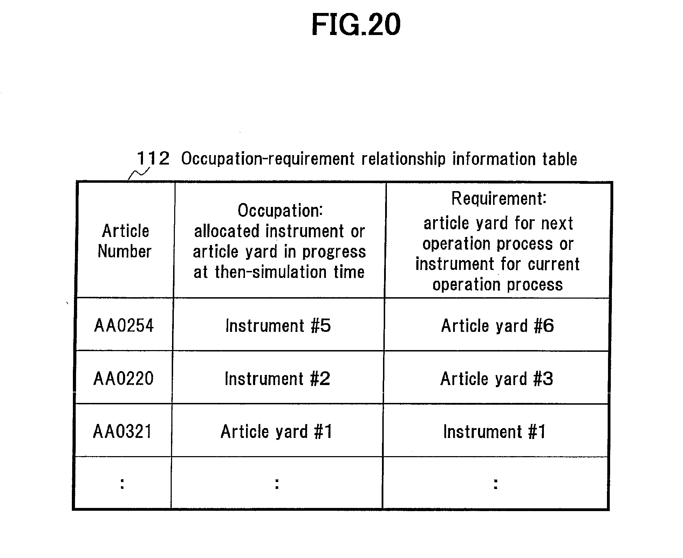

FIG. 18 is an example of a detailed flowchart of the deadlock detection/resolution processing (step S50 of FIG. 15). FIG. 19 is an example of a detailed flowchart of an occupation relationship acquisition processing used in the deadlock detection/resolution processing. FIG. 20 is an example of a configuration of an occupation-requirement relationship information table acquired in the occupation relationship acquisition processing.

The occupation relationship acquisition processing is a processing of acquiring, as an occupation-requirement relationship information table 112 shown in FIG. 20, an instrument or an article yard occupied by an article and an instrument or an article yard required by the article at a simulation time t in an article flow simulation processing during execution.

As shown in FIG. 20, rows of the occupation-requirement relationship information table 112 each contain fields of "Article Number", "Occupation", and "Requirement". In the "Article Number" field, an article number for identifying an article is stored. In the "Occupation" field, information identifying an instrument or an article yard which is occupied by the article identified by the "Article Number" field at a then-simulation time t is stored. In the "Requirement" field, information identifying an instrument or an article yard which is required by the article identified by the "Article Number" field at the then-simulation time t is stored.

Next are described details of the deadlock detection/resolution processing with reference to FIG. 18.

The CPU 11 sets an allocation availability flag of each of all articles to "1" (step S501) and executes occupation-requirement relationship acquisition processing (step S502). In the occupation-requirement relationship acquisition processing, the CPU 11 acquires an identification number of an instrument, an article yard, or a temporal yard occupied at the simulation time t, and an identification number of an instrument, an article yard, or a temporal yard required at that time, and stores the acquired information in the occupation-requirement relationship information table 112 shown in FIG. 20. Details of the processing will be explained hereinafter with reference to FIG. 19.

The CPU 11 detects a deadlock at the then-simulation time t from the occupation-requirement relationship information table 112 acquired in the occupation-requirement relationship acquisition processing of step S502 (step S503). How to detect a deadlock includes, for example, a method using the graph theory as disclosed in Non-Patent Document 1. In this embodiment, however, any method of detecting a deadlock can be used without limitation.

In Non-Patent Document 1, an instrument or an article yard is represented by a node. Nodes are connected by a directed edge whose initial vertex is an instrument or an article yard shown in the "Occupation" field and whose terminal vertex is an instrument or an article yard shown in the "Requirement" field in each row of the occupation-requirement relationship information table 112 which is to be described later. Occupation-requirement relationship between the nodes is thus represented by a directed graph. A deadlock can be detected by detecting a loop structure in the directed graph.

The CPU 11 determines whether or not a deadlock has been detected in step S503 (step S504) and, if a deadlock is determined to have been detected (if Yes in step S504), sets a deadlock count d to 1 (step S505). The CPU 11 then acquires a d-th deadlock as a deadlock DL, from among the deadlocks detected in step S503 (step S506).

The CPU 11 acquires an article number of any one of articles involved in the deadlock DL as an article par (step S507) and also acquires a number of a temporal yard which is used in an operation process with respect to the article par at a then-simulation time t, as a temporal yard tbuf, from the operation process route information table 102 and the temporal yard information table 105 (step S508).

The CPU 11 allocates the article par to the temporal yard tbuf (step S509) and adds a new row for storing information on the allocation, to the article transportation schedule information table 111 (step S51 0). More specifically, the CPU 11 extracts, from the article transportation schedule information table 111, such a row satisfying all of that: the "Article Number" field has an article number identical to a number of the article par; the "Operation Number" field has an operation number identical to an operation number for the article par; and the "Operation Completion Time" field is empty, and then, stores a then-simulation time t in the "Operation Completion Time" field of the extracted row. Further, the CPU 11 adds a new row to the article transportation schedule information table 111 and stores in the row: the article number of the article par in the "Article Number" field; the operation number of the article par in the "Operation Number" field; a character string of "Standby in temporal yard" in the "Status" field; the number of the temporal yard tbuf in the "Instrument Number, Article Yard Number, or Temporal Yard Number" field; and the then-simulation time t in the "Operation Start Time" field.

The CPU 11 acquires instrument numbers or article yard numbers of all of the articles involved in the deadlock DL as an instrument group macs or an article yard group bufs, from the "Occupation" field of the occupation-requirement relationship information table 112 (step S511).

The CPU 11 acquires, as an article group pars, all article numbers of the articles each of whose "Requirement" field contains an instrument number of the instrument group macs or an article yard number of the article yard group bufs, from among the articles which are not involved in the deadlock DL, from the occupation-requirement relationship information table 112 (step S512).

The CPU 11 sets allocation availability flags of all of the articles in the article group pars to "0" (step S513) and determines whether or not the deadlock count d is equal to the number of all of the deadlocks detected in step S503 (step S514). As a result of the determination, if the deadlock count d is not equal to the number of all of the deadlocks (if No in step S514), the CPU 11 increments the deadlock count d by 1 (step S515), returns the processing to step S506, and repeats execution of step S506 and its subsequent steps.

On the other hand, if the deadlock count d is determined to be equal to the number of all of the deadlocks (if Yes in step S514), the CPU 11 terminates the deadlock detection/resolution processing. Note that, if no deadlock is detected in step S504 (if No in step S504), the CPU 11 terminates the deadlock detection/resolution processing.

Next are described details of the occupation-requirement relationship acquisition processing with reference to FIG. 19.

The CPU 11 sets an article count i to "1" (step S601) and acquires an article number of an article in an i-th row of the article information table 101, as the article par (step S602).

The CPU 11 acquires an instrument number of an instrument or an article yard number of an article yard with respect to which the article par is in progress at a then-simulation time t, as the instrument mac or the article yard buf, from the article transportation schedule information table 111 (step S603). More specifically, the CPU 11 extracts such a row that: an article number in the "Article Number" field of the article transportation schedule information table 111 is identical to a number of the article par; and the "Operation Completion Time" field is empty. The CPU 11 then acquires a value in the "Instrument Number, Article Yard Number, or Temporal Yard Number" field of the extracted row.

The CPU 11 determines whether with respect to which the article par is in progress is an instrument or not, based on a result obtained in step S603 (step S604). If the article par is determined to be in progress with respect to an instrument (if Yes in step S604), the CPU 11 advances the processing to step S605. On the other hand, if the article par is not determined to be in progress with respect to an instrument (that is, the article par is in progress with respect to an article yard) (if No in step S604), the CPU 11 advances the processing to step S607.

In a case where the processing is advanced to step S605, the CPU 11 records the instrument mac in the "Occupation" field of a row whose "Article Number" field contains an article number of the article par, of the occupation-requirement relationship information table 112 (step S605). The CPU 11 references the article information table 101 and the operation process route information table 102 and acquires an article yard number of an article yard used in the next operation process of the article par, based on the operation number of the article par. The CPU 11 then records the article yard number of the article yard for the next operation process of the article par, in the "Requirement" field of the row whose "Article Number" field contains the article number of the article par, of the occupation-requirement relationship information table 112 (step S606).

In the other case where the processing is advanced to step S607, the CPU 11 records the article yard buf in the "Occupation" field of the row whose "Article Number" field contains the article par, of the occupation-requirement relationship information table 112 (step S607). The CPU 11 acquires an operation process in which the article yard buf is used, from the article yard information table 104, also acquires an instrument number of an instrument used in the acquired operation process, from the instrument information table 103, and records an instrument number of an instrument used in the operation process used in the article yard buf, in the "Requirement" field of the row whose "Article Number" field contains the article number of the article par, of the occupation-requirement relationship information table 112 (step S608).

After step S606 or step S608, the CPU 11 determines whether or not the article count i is identical to the total number of the articles (step S609). If the article count i is not determined to be identical to the total number of the articles (if No in step S609), the CPU 11 increments the article count i by 1 (step S610), returns the processing to step S602, and repeats execution of step S602 and its subsequent steps. On the other hand, if the article count i is determined to be identical to the total number of the articles (if Yes in step S609), the CPU 11 terminates execution of the occupation relationship acquisition processing.

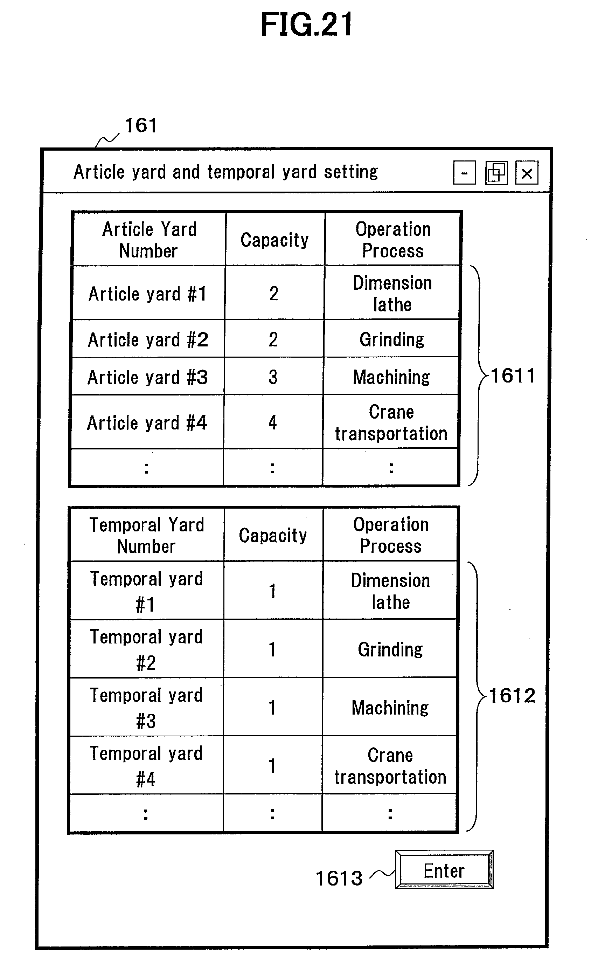

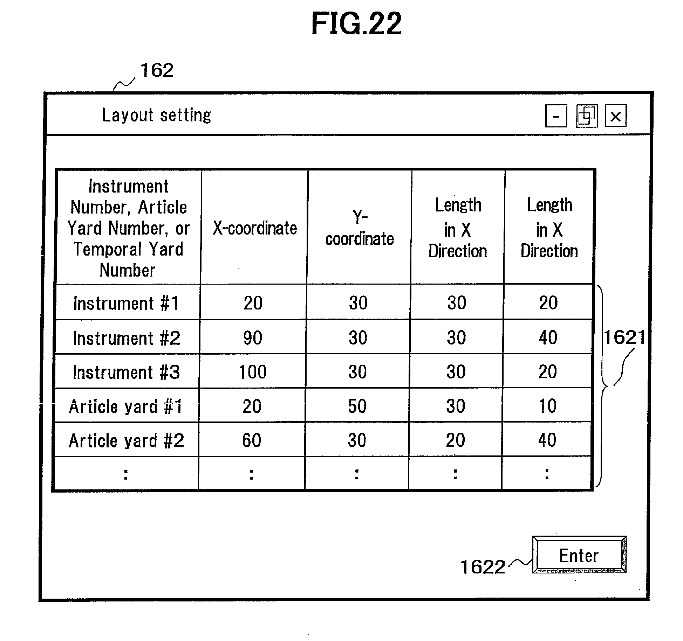

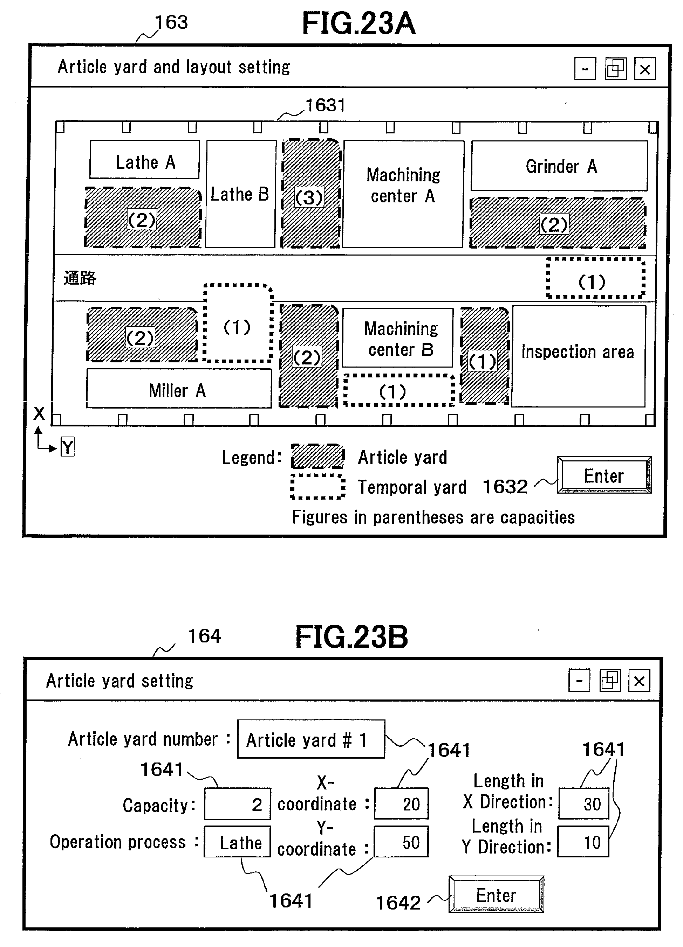

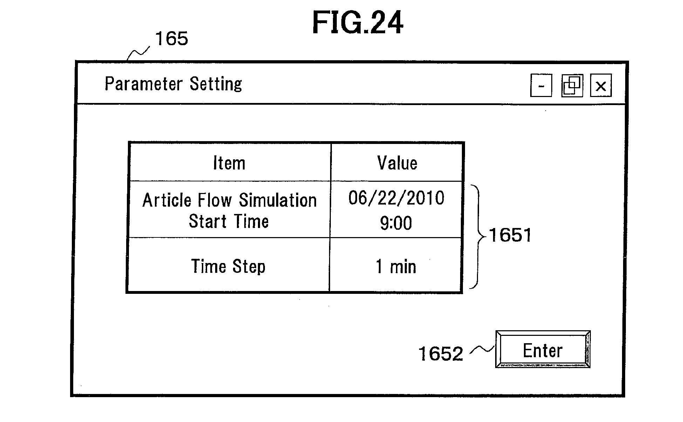

Next is described an example of an information entry screen displayed in the display device 16 by the input processing part 125 with reference to FIG. 21 to FIG. 24. FIG. 21 is a diagram illustrating an example of an article yard and temporal yard setting screen. FIG. 22 is a diagram illustrating an example of a layout setting screen. FIG. 23A and FIG. 23B are diagrams illustrating examples of an article yard and layout setting screen and an article yard setting screen, respectively. FIG. 24 is a diagram illustrating an example of a parameter setting screen.

As shown in FIG. 21, the article yard and temporal yard setting screen 161 includes an entry screen for setting the article yard information table 104 and the temporal yard information table 105. The article yard and temporal yard setting screen 161 thus includes entry fields 1611, 1612 each containing an identification number for identifying an article yard or a temporal yard, a capacity of the article yard or the temporal yard, and an operation process in which the article yard or the temporal yard is used.

When a user enters appropriate information such as an identification number, a capacity, and an operation process of an article yard or a temporal yard, via the article yard and temporal yard setting screen 161 and clicks an enter button 1613 using a mouse cursor or the like, the entered information is stored in the article yard information table 104 and the temporal yard information table 105.

As shown in FIG. 22, the layout setting screen 162 is an entry screen for setting layout of an instrument, an article yard, and a temporal yard, such as an arrangement or a size thereof. The layout setting screen 162 includes entry fields 1621 in which: an identification number for identifying the instrument, the article yard, or the temporal yard; coordinate information for identifying a position at which the instrument, the article yard, or the temporal yard is arranged (an X-coordinate and a Y-coordinate); information for specifying a size of the instrument, the article yard, or the temporal yard as an area of a rectangle (a length in an X-direction and a length in a Y-direction) are entered.

When a user enters appropriate information for setting a layout of an instrument, an article yard, and a temporal yard such as an arrangement and a size thereof via the layout setting screen 162 and clicks an enter button 162 using a mouse cursor or the like, the entered information is stored in the layout information table 108.

FIG. 23A is a diagram illustrating an example of an article yard and layout setting screen 163. FIG. 23B is a diagram illustrating an example of an article yard setting screen 164. The two setting screens are entry screens corresponding to the layout setting screen 162 shown in FIG. 22 and are designed to allow a user to set a position or a size of an article yard or the like with graphic manipulation.

The article yard and layout setting screen 163 of FIG. 23A displays an instrument layout chart 1631 in which a layout of an instrument, an article yard, and a temporal yard is shown. Using the instrument layout chart 1631, a user can define a position or a size of the instrument, the article yard, and the temporal yard, move the position or change the size of the defined instrument, article yard, and temporal yard by dragging any of them using a mouse or the like. When the user clicks any one of the instrument, the article yard, the temporal yard, and the like displayed in the instrument layout chart 1631, an article yard setting screen 164 as shown in FIG. 23B appears. Note that, when a user selects a displayed instrument or temporal yard and clicks thereon, it is assumed that a setting screen similar to that shown in FIG. 23B appears, though detailed explanation is omitted herefrom.

The article yard setting screen 164 includes entry fields 1641 in which: an article yard number; a capacity of the article yard; an operation process in which the article yard is used; coordinate information for identifying a position at which the article yard is arranged (an X-coordinate and a Y-coordinate); information for specifying a size of the article yard as an area of a rectangle (a length in an X-direction and a length in a Y-direction) are entered. If a value has already been set in any of the entry fields 1641, the set value is displayed. If a value has not yet been set therein, a blank space is displayed. Thus, a user can enter a new value into the entry field 1641 or change the already-set value where necessary.

If a user wants to enter a value set on the article yard setting screen 164 as a final data, the user clicks an enter button 1642 displayed on the article yard setting screen 164 using a mouse cursor or the like. Then the article yard and layout setting screen 163 reappears. If the user clicks an enter button 1632 displayed on the article yard and layout setting screen 163 using the mouse cursor or the like, information set on the article yard and layout setting screen 163 and the article yard setting screen 164 is stored in the article yard information table 104, the temporal yard information table 105, and the layout information table 108.

As shown in FIG. 24, the parameter setting screen 165 is an entry screen for setting an article flow simulation start time and a time step. The parameter setting screen 165 includes entry fields 1651 in which information on the article flow simulation start time and the time step required for starting an article flow simulation is entered. When the user enters the information on the article flow simulation start time and the time step in any of the entry fields 1651 and clicks an enter button 1652 using a mouse cursor or the like, the entered information is stored in the parameter information table 110.

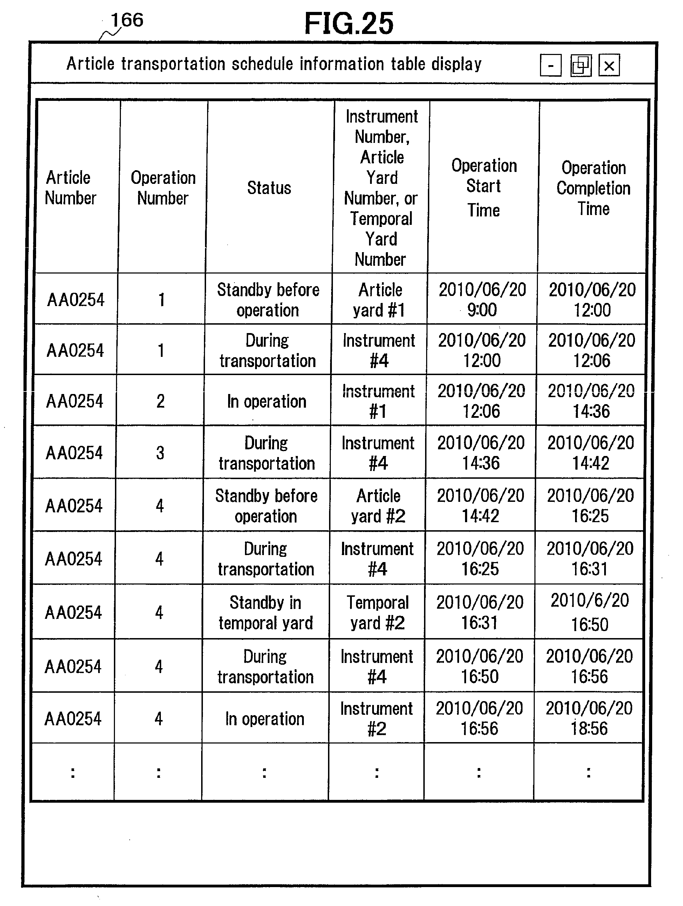

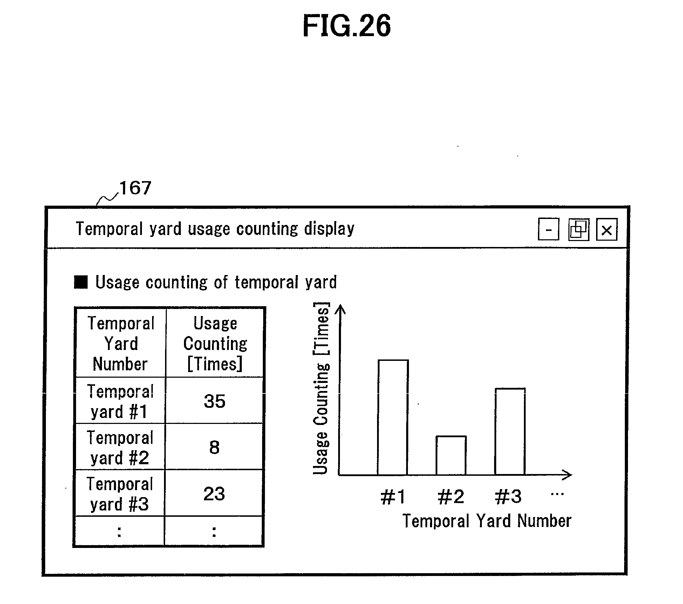

Next are described examples of results of an article flow simulation displayed in the display device 16 by the display processing part 126 with reference to FIG. 25 and FIG. 26. FIG. 25 is a diagram illustrating an example of an article transportation schedule information table display screen. FIG. 26 is a diagram illustrating an example of a temporal yard usage counting display screen.

As shown in FIG. 25, the article transportation schedule information table display screen 166 displays the article transportation schedule information table 111 as it is in the display device 16, as a result of an article flow simulation. Thus, a configuration of the article transportation schedule information table 111 displayed on the article transportation schedule information table display screen 166 is the same as the configuration of the article transportation schedule information table 111 described above with reference to FIG. 14.

The user can know how is an operation or a standby state of an article, by referring to the article transportation schedule information table 111 displayed on the article transportation schedule information table display screen 166. The user can also know an article transportation schedule as a result of resolution of a deadlock using a temporal yard.

As shown in FIG. 26, the temporal yard usage counting display screen 167 displays thereon how many times a temporal yard is used for resolving a deadlock during execution of an article flow simulation, in form of a table or a bar graph. A larger number of the usage counting means more frequent deadlocks. Therefore, if, for example, a temporal yard having a large number of the usage counting is shifted to an article yard, blockage of an article flow due to a deadlock can be reduced, which allows productivity to be improved and a delay in an operation schedule to be reduced.

In sum, a user of the article transportation schedule planning apparatus 10 can, for example, switch a frequently-used temporal yard to an article yard or add another temporal yard, using the temporal yard usage counting display screen 167, and repeatedly run article flow simulations. This makes it possible for the user to perform article yard designing or temporal yard designing which can improve productivity and reduce a delay in operation schedule.

### DESCRIPTION OF REFERENCE NUMERALS

- 1: article transportation schedule planning system
- 10: article transportation schedule planning apparatus
- 11: CPU
- 12: memory
- 13: auxiliary storage device
- 14: communication device
- 15: input device
- 16: display device
- 20: communication network
- 30: order receipt processing device
- 40: schedule management device
- 50: operation result management device
- 100: storage unit
- 101: article information table
- 102: operation process route information table
- 103: instrument information table
- 104: article yard information table
- 105: temporal yard information table
- 106: operation time information table
- 107: transportation time information table
- 108: layout information table
- 109: in-progress information table
- 110: parameter information table
- 111: article transportation schedule information table
- 112: occupation-requirement relationship information table
- 120: information processing unit
- 121: information acquisition processing part
- 122: article flow simulation processing part
- 123: deadlock detection resolution processing part
- 124: temporal yard usage counting processing part
- 125: input processing part
- 126: display processing part
- 127: communication processing part
- 161: article yard and temporal yard setting screen
- 162: layout setting screen
- 163: article yard and layout setting screen
- 164: article yard setting screen
- 165: parameter setting screen
- 166: article transportation schedule information table display screen
- 167: temporal yard usage counting display screen

## Claims

1. An article transportation simulation apparatus which simulates how a plurality of articles are transported between a plurality of instruments or article yards, comprising:
a storage unit that stores therein: operation process route information which is information, for each article, on a route of an operation process to which the article is subjected and which includes information on an order of operations of the operation process; instrument and article yard information which is information, for each operation process, on an instrument and an article yard required in the operation process; operation time information which is information, for each article and each operation process, on a time required for completing an operation and in which the operation time is associated with the article and the operation process; transportation time information which is information on a time for transporting an article between article yards or instruments, operation in-progress information which is information on an operation being in progress and which includes information on an order of the operations in progress of an operation process for an article; and temporal yard information which is information on a temporarily-available temporal yard for each of all or part of an operation process and in which the temporal yard is associated with the operation process;
an article flow simulation processing part that, while a simulation time is made to advance, computes, for each of the advanced simulation time, information, for each article, on a status of an operation to which the article is subjected, an instrument or an article yard at which the article is present, and an instrument or an article yard at which the article is to be present next, based on the operation in-progress information, the operation process route information, the instrument and article yard information, the operation time information, and the transportation time information;
a deadlock detection processing part that, when the article is transported from the instrument or the article yard at which the article is present at that time, to the instrument or the article yard at which the article is to be present next, determines, for each of the simulation time, whether or not a deadlock occurs, to thereby detect a deadlock; and
a deadlock resolution processing part that, if a deadlock is determined to occur, then, with respect to at least one of articles involved in the deadlock, changes the article yard at which the article is to be present next, to one of temporal yards specified by the temporal yard information so as to resolve the deadlock.

2. An article transportation schedule planning apparatus which plans an article transportation schedule for transporting a plurality of articles between a plurality of instruments or article yards, comprising:
a storage unit that stores therein: operation process route information which is information, for each article, on a route of an operation process to which the article is subjected and which includes information on an order of operations of the operation process; instrument and article yard information which is information, for each operation process, on an instrument and an article yard required in the operation process; operation time information which is information, for each article and each operation process, on a time required for completing an operation and in which the operation time is associated with the article and the operation process; transportation time information which is information on a time for transporting an article between article yards or instruments, operation in-progress information which is information on an operation being in progress and which includes information on an order of the operations in progress of an operation process for an article; and temporal yard information which is information on a temporarily-available temporal yard for each of all or part of an operation process and in which the temporal yard is associated with the operation process;
an article flow simulation processing part that, while a simulation time is made to advance, computes, for each of the advanced simulation time, information, for each article, on a status of an operation to which the article is subjected, an instrument or an article yard at which the article is present, and an instrument or an article yard at which the article is to be present next, based on the operation in-progress information, the operation process route information, the instrument and article yard information, the operation time information, and the transportation time information;
a deadlock detection processing part that, when the article is transported from the instrument or the article yard at which the article is present at that time, to the instrument or the article yard at which the article is to be present next, determines, for each of the simulation time, whether or not a deadlock occurs, to thereby detect a deadlock; and
a deadlock resolution processing part that, if a deadlock is determined to occur, then, with respect to at least one of articles involved in the deadlock, changes the article yard at which the article is to be present next, to one of temporal yards specified by the temporal yard information so as to resolve the deadlock,
wherein, when a status of an operation to which the article computed by the article flow simulation processing part is subjected is changed to another, a start time and a completion time of the operation is acquired based on a simulation time when the change occurs; the acquired start time and completion time which are made to be associated with information on the operation of the article, the status of the operation, and an appropriate instrument or article yard, is stored in the storage unit; and an article transportation schedule information is thereby prepared.

3. An article yard designing support apparatus in which designing of an article yard in an operation site in which a plurality of operations are performed using a plurality of articles, is supported by a computer, comprising:
a storage unit that stores therein: operation process route information which is information, for each article, on a route of an operation process to which the article is subjected and which includes information on an order of operations of the operation process; instrument and article yard information which is information, for each operation process, on an instrument and an article yard required in the operation process; operation time information which is information, for each article and each operation process, on a time required for completing an operation and in which the operation time is associated with the article and the operation process; transportation time information which is information on a time for transporting an article between article yards or instruments, operation in-progress information which is information on an operation being in progress and which includes information on an order of the operations in progress of an operation process for an article; and temporal yard information which is information on a temporarily-available temporal yard for each of all or part of an operation process and in which the temporal yard is associated with the operation process;
an article flow simulation processing part that, while a simulation time is made to advance, computes, for each of the advanced simulation time, information, for each article, on a status of an operation to which the article is subjected, an instrument or an article yard at which the article is present, and an instrument or an article yard at which the article is to be present next, based on the operation in-progress information, the operation process route information, the instrument and article yard information, the operation time information, and the transportation time information;
a deadlock detection processing part that, when the article is transported from the instrument or the article yard at which the article is present at that time, to the instrument or the article yard at which the article is to be present next, determines, for each of the simulation time, whether or not a deadlock occurs, to thereby detect a deadlock; and
a deadlock resolution processing part that, if a deadlock is determined to occur, then, with respect to at least one of articles involved in the deadlock, changes the article yard at which the article is to be present next, to one of temporal yards specified by the temporal yard information so as to resolve the deadlock,
wherein, when a status of an operation to which the article computed by the article flow simulation processing part is subjected is changed to another, a start time and a completion time of the operation is acquired based on a simulation time when the change occurs; the acquired start time and completion time which are made to be associated with information on the operation of the article, the status of the operation, and an appropriate instrument or article yard, is stored in the storage unit; and an article transportation schedule information is thereby prepared, and
wherein how many times the temporal yard is used in the prepared article transportation schedule information is computed, and the computed usage counting of the temporal yard is displayed in a display device.

4. An article transportation simulation method of simulating how a plurality of articles are transported between a plurality of instruments or article yards by a computer,
the computer including a storage unit that stores therein: operation process route information which is information, for each article, on a route of an operation process to which the article is subjected and which includes information on an order of operations of the operation process; instrument and article yard information which is information, for each operation process, on an instrument and an article yard required in the operation process; operation time information which is information, for each article and each operation process, on a time required for completing an operation and in which the operation time is associated with the article and the operation process; transportation time information which is information on a time for transporting an article between article yards or instruments, operation in-progress information which is information on an operation being in progress and which includes information on an order of the operations in progress of an operation process for an article; and temporal yard information which is information on a temporarily-available temporal yard for each of all or part of an operation process and in which the temporal yard is associated with the operation process,
the article transportation simulation method performed by the computer, comprising:
an article flow simulation step of computing, while a simulation time is made to advance, for each of the advanced simulation time, information, for each article, on a status of an operation to which the article is subjected, an instrument or an article yard at which the article is present, and an instrument or an article yard at which the article is to be present next, based on the operation in-progress information, the operation process route information, the instrument and article yard information, the operation time information, and the transportation time information;
a deadlock detection step of determining, when the article is transported from the instrument or the article yard at which the article is present at that time, to the instrument or the article yard at which the article is to be present next, for each of the simulation time, whether or not a deadlock occurs, to thereby detect a deadlock; and
a deadlock resolution step of, if a deadlock is determined to occur, with respect to at least one of articles involved in the deadlock, changing the article yard at which the article is to be present next, to one of temporal yards specified by the temporal yard information so as to resolve the deadlock.

5. An article transportation schedule planning method of planning an article transportation schedule for transporting a plurality of articles between a plurality of instruments or article yards, by a computer,
the computer including a storage unit that stores therein: operation process route information which is information, for each article, on a route of an operation process to which the article is subjected and which includes information on an order of operations of the operation process; instrument and article yard information which is information, for each operation process, on an instrument and an article yard required in the operation process; operation time information which is information, for each article and each operation process, on a time required for completing an operation and in which the operation time is associated with the article and the operation process; transportation time information which is information on a time for transporting an article between article yards or instruments, operation in-progress information which is information on an operation being in progress and which includes information on an order of the operations in progress of an operation process for an article; and temporal yard information which is information on a temporarily-available temporal yard for each of all or part of an operation process and in which the temporal yard is associated with the operation process,
the article transportation schedule planning method performed by the computer, comprising:
an article flow simulation step of computing, while a simulation time is made to advance, for each of the advanced simulation time, information, for each article, on a status of an operation to which the article is subjected, an instrument or an article yard at which the article is present, and an instrument or an article yard at which the article is to be present next, based on the operation in-progress information, the operation process route information, the instrument and article yard information, the operation time information, and the transportation time information;
a deadlock detection step of determining, when the article is transported from the instrument or the article yard at which the article is present at that time, to the instrument or the article yard at which the article is to be present next, for each of the simulation time, whether or not a deadlock occurs, to thereby detect a deadlock;
a deadlock resolution step of, if a deadlock is determined to occur, with respect to at least one of articles involved in the deadlock, changing the article yard at which the article is to be present next, to one of temporal yards specified by the temporal yard information so as to resolve the deadlock,
a step of, when a status of an operation to which the article is subjected is changed to another in the article flow simulation step, acquiring a start time and a completion time of the operation based on a simulation time when the change occurs; storing the acquired start time and completion time which are made to be associated with information on the operation of the article, the status of the operation, and an appropriate instrument or article yard, in the storage unit; and thereby preparing an article transportation schedule information.

6. An article yard designing support method of supporting designing of an article yard in an operation site in which a plurality of operations are performed using a plurality of articles, by a computer,
the computer including a storage unit that stores therein: operation process route information which is information, for each article, on a route of an operation process to which the article is subjected and which includes information on an order of operations of the operation process; instrument and article yard information which is information, for each operation process, on an instrument and an article yard required in the operation process; operation time information which is information, for each article and each operation process, on a time required for completing an operation and in which the operation time is associated with the article and the operation process; transportation time information which is information on a time for transporting an article between article yards or instruments, operation in-progress information which is information on an operation being in progress and which includes information on an order of the operations in progress of an operation process for an article; and temporal yard information which is information on a temporarily-available temporal yard for each of all or part of an operation process and in which the temporal yard is associated with the operation process,
the article yard designing support method performed by the computer, comprising:
an article flow simulation step of computing, while a simulation time is made to advance, for each of the advanced simulation time, information, for each article, on a status of an operation to which the article is subjected, an instrument or an article yard at which the article is present, and an instrument or an article yard at which the article is to be present next, based on the operation in-progress information, the operation process route information, the instrument and article yard information, the operation time information, and the transportation time information;
a deadlock detection step of determining, when the article is transported from the instrument or the article yard at which the article is present at that time, to the instrument or the article yard at which the article is to be present next, for each of the simulation time, whether or not a deadlock occurs, to thereby detect a deadlock;
a deadlock resolution step of, if a deadlock is determined to occur, with respect to at least one of articles involved in the deadlock, changing the article yard at which the article is to be present next, to one of temporal yards specified by the temporal yard information so as to resolve the deadlock; and
a step of, when a status of an operation to which the article is subjected is changed to another in the article flow simulation step, acquiring a start time and a completion time of the operation based on a simulation time when the change occurs; storing the acquired start time and completion time which are made to be associated with information on the operation of the article, the status of the operation, and an appropriate instrument or article yard, in the storage unit; thereby preparing an article transportation schedule information; computing how many times the temporal yard is used in the prepared article transportation schedule information; and displaying the computed usage counting of the temporal yard in a display device.

7. A program for causing a computer to simulate how a plurality of articles are transported between a plurality of instruments or article yards,
the computer including a storage unit that stores therein: operation process route information which is information, for each article, on a route of an operation process to which the article is subjected and which includes information on an order of operations of the operation process; instrument and article yard information which is information, for each operation process, on an instrument and an article yard required in the operation process; operation time information which is information, for each article and each operation process, on a time required for completing an operation and in which the operation time is associated with the article and the operation process; transportation time information which is information on a time for transporting an article between article yards or instruments, operation in-progress information which is information on an operation being in progress and which includes information on an order of the operations in progress of an operation process for an article; and temporal yard information which is information on a temporarily-available temporal yard for each of all or part of an operation process and in which the temporal yard is associated with the operation process,
the program causing the computer to perform:
an article flow simulation processing of computing, while a simulation time is made to advance, for each of the advanced simulation time, information, for each article, on a status of an operation to which the article is subjected, an instrument or an article yard at which the article is present, and an instrument or an article yard at which the article is to be present next, based on the operation in-progress information, the operation process route information, the instrument and article yard information, the operation time information, and the transportation time information;
a deadlock detection processing of determining, when the article is transported from the instrument or the article yard at which the article is present at that time, to the instrument or the article yard at which the article is to be present next, for each of the simulation time, whether or not a deadlock occurs, to thereby detect a deadlock; and
a deadlock resolution processing of, if a deadlock is determined to occur, with respect to at least one of articles involved in the deadlock, changing the article yard at which the article is to be present next, to one of temporal yards specified by the temporal yard information so as to resolve the deadlock.

8. A program for causing a computer to plan an article transportation schedule for transporting a plurality of articles between a plurality of instruments or article yards,
the computer including a storage unit that stores therein: operation process route information which is information, for each article, on a route of an operation process to which the article is subjected and which includes information on an order of operations of the operation process; instrument and article yard information which is information, for each operation process, on an instrument and an article yard required in the operation process; operation time information which is information, for each article and each operation process, on a time required for completing an operation and in which the operation time is associated with the article and the operation process; transportation time information which is information on a time for transporting an article between article yards or instruments, operation in-progress information which is information on an operation being in progress and which includes information on an order of the operations in progress of an operation process for an article; and temporal yard information which is information on a temporarily-available temporal yard for each of all or part of an operation process and in which the temporal yard is associated with the operation process,
the program causing the computer to perform:
an article flow simulation processing of computing, while a simulation time is made to advance, for each of the advanced simulation time, information, for each article, on a status of an operation to which the article is subjected, an instrument or an article yard at which the article is present, and an instrument or an article yard at which the article is to be present next, based on the operation in-progress information, the operation process route information, the instrument and article yard information, the operation time information, and the transportation time information;
a deadlock detection processing of determining, when the article is transported from the instrument or the article yard at which the article is present at that time, to the instrument or the article yard at which the article is to be present next, for each of the simulation time, whether or not a deadlock occurs, to thereby detect a deadlock;
a deadlock resolution processing of, if a deadlock is determined to occur, with respect to at least one of articles involved in the deadlock, changing the article yard at which the article is to be present next, to one of temporal yards specified by the temporal yard information so as to resolve the deadlock; and
a processing of: when a status of an operation to which the article is subjected is changed to another in the article flow simulation processing, acquiring a start time and a completion time of the operation based on a simulation time when the change occurs; storing the acquired start time and completion time which are made to be associated with information on the operation of the article, the status of the operation, and an appropriate instrument or article yard, in the storage unit; and thereby preparing an article transportation schedule information.

9. A program for causing a computer to support designing of an article yard in an operation site in which a plurality of operations are performed using a plurality of articles,
the computer including a storage unit that stores therein: operation process route information which is information, for each article, on a route of an operation process to which the article is subjected and which includes information on an order of operations of the operation process; instrument and article yard information which is information, for each operation process, on an instrument and an article yard required in the operation process; operation time information which is information, for each article and each operation process, on a time required for completing an operation and in which the operation time is associated with the article and the operation process; transportation time information which is information on a time for transporting an article between article yards or instruments, operation in-progress information which is information on an operation being in progress and which includes information on an order of the operations in progress of an operation process for an article; and temporal yard information which is information on a temporarily-available temporal yard for each of all or part of an operation process and in which the temporal yard is associated with the operation process,
the program causing the computer to perform:
an article flow simulation processing of computing, while a simulation time is made to advance, for each of the advanced simulation time, information, for each article, on a status of an operation to which the article is subjected, an instrument or an article yard at which the article is present, and an instrument or an article yard at which the article is to be present next, based on the operation in-progress information, the operation process route information, the instrument and article yard information, the operation time information, and the transportation time information;
a deadlock detection processing of determining, when the article is transported from the instrument or the article yard at which the article is present at that time, to the instrument or the article yard at which the article is to be present next, for each of the simulation time, whether or not a deadlock occurs, to thereby detect a deadlock; and
a deadlock resolution processing of, if a deadlock is determined to occur, with respect to at least one of articles involved in the deadlock, changing the article yard at which the article is to be present next, to one of temporal yards specified by the temporal yard information so as to resolve the deadlock; and
a processing of: when a status of an operation to which the article is subjected is changed to another in the article flow simulation processing, acquiring a start time and a completion time of the operation based on a simulation time when the change occurs; storing the acquired start time and completion time which are made to be associated with information on the operation of the article, the status of the operation, and an appropriate instrument or article yard, in the storage unit; thereby preparing an article transportation schedule information; computing how many times the temporal yard is used in the prepared article transportation schedule information; and displaying the computed usage counting of the temporal yard in a display device.
